# EUROPEAN PATENT APPLICATION

(11) **EP 4 582 887 A1**
(43) Date of publication of application: **09.07.2025**
(21) Application number: 23859440.2
(22) Date of filing: 31.08.2023
(51) Int. Cl.: G05B 19/042

(54) **ELECTRIC TOOL**

(30) Priority: 31.08.2022 CN 202211055421; 28.04.2023 CN 202310484470; 27.06.2023 CN 202310768279
(71) Applicant: Positec Power Tools (Suzhou) Co., Ltd., Suzhou, Jiangsu 215123 (CN)
(72) Inventor: ZHANG, Yu, Suzhou, Jiangsu 215123 (CN); GUO, Shiyin, Suzhou, Jiangsu 215123 (CN); WILLIAM HUGHES, Gareth, Suzhou, Jiangsu 215123 (CN); WANG, Jianjie, Suzhou, Jiangsu 215123 (CN); WANG, Jian, Suzhou, Jiangsu 215123 (CN)
(74) Representative: Kilburn & Strode LLP
(86) International application number: PCT/CN2023/116056
(87) International publication number: WO 2024/046411

(57) **Abstract**

The invention relates to an electric tool, and a control method for a motor of an electric tool. A signal unit feeds back a first state signal when a push handle component is in a working position area and the push handle component is locked relative to a main unit; and the signal unit feeds back a second state signal when the push handle component is in a non-working position area. When receiving the first state signal, a control unit controls a motor to be started according to a first control logic; and when receiving the second state signal, the control unit controls the motor to be started according to a second control logic, where the second control logic is different from the first control logic. In this way, when the push handle component is in the non-working position area, a different starting logic is used to control the motor to be started, so that a probability that a user accidentally starts an electric tool because of accidentally triggering a switch assembly is reduced, and a use risk of the user is reduced, thereby improving safety of the electric tool.

## Description

### TECHNICAL FIELD

The present invention relates to the field of electric device technologies, and in particular, to control of a motor of an electric tool.

### BACKGROUND

With continuous expansion of greened areas of cities, greened belts of public places such as parks and roads are spread all over the country, and electric gardening tools such as lawn mowers and branch pruners are also widely applied. For a gardening tool, for example, a lawn mower, a transfer operation usually needs to be performed between different working sites. For a lawn mower with a retractable push rod, during transfer or transportation, to save transportation space, an operator usually first rotates the push rod of the lawn mower to a retracted state.In a process of rotating the push rod or in the retracted state, the operator is very likely to trigger a switch of a motor accidentally. Consequently, in a process of retracting the push rod or in the retracted state, the operator can still normally start the lawn mower. In this case, the operator is too close to the lawn mower and is put in danger, causing a great potential safety hazard to the operator.

### SUMMARY

An embodiment of this application provides an electric tool, including: a main unit; a functional component, including a working portion and a motor configured to drive the working portion to work; a motor starting switch, configured to control the motor in response to an operation by a user; a push handle component, connected to the main unit, where the push handle component is rotatable around the main unit, a rotation area of the push handle component includes a working position area and a non-working position area, and the push handle component is fixed relative to the main unit and is used for the user to operate to push the main unit to move when the push handle component is in the working position area; an adjustment member and an engagement member, where the push handle component is locked to the main unit when the adjustment member is engaged with the engagement member, and the push handle component is unlocked from the main unit and is rotatable around the main unit when the adjustment member is disengaged from the engagement member; a signal unit, where the signal unit is configured to feed back different state signals in response to position changes of the push handle component, the signal unit is configured to feed back a first state signal when the push handle component is in the working position area and the push handle component is locked relative to the main unit, and the signal unit is configured to feed back a second state signal when the push handle component is in the non-working position area; and a control circuit, configured to receive the state signals fed back by the signal unit and adjust, according to the different received state signals, a control logic for starting the motor; where the control circuit controls, according to a first control logic, the motor to start working when the control circuit receives the first state signal, and the control circuit controls, according to a second control logic, the motor to start working when the control circuit receives the second state signal, where the second control logic is different from the first control logic.

In some embodiments, the electric tool includes a power-on switch, the power-on switch is triggered in response to an operation by the user, to switch the control circuit between an inactivated state and an activated state, the control circuit allows current of a power supply to flow to the motor when the control circuit is in the activated state, and the control circuit prohibits the current of the power supply from flowing to the motor when the control circuit is in the inactivated state, where a time in which the power-on switch is triggered until the control circuit is switched from the inactivated state to the activated state is defined as a trigger holding time of the power-on switch; the motor starting switch includes a first operating element, the first operating element outputs a motor starting signal in response to an operation by the user, the control circuit is in the activated state, and the first operating element is triggered, and the control circuit controls the current of the power supply to flow to the motor, to cause the motor to drive the working portion to work, where the control circuit enters the activated state, and allows the motor starting signal to be received in a preset time, and the preset time is defined as an allowed trigger time of the first operating element; and trigger holding times of the power-on switch are different under the first control logic and the second control logic; and/or allowed trigger times of the first operating element are different under the first control logic and the second control logic.

In some embodiments, the control circuit further includes a timing unit, the control circuit configured to determine, according to a timing time of the timing unit, whether the trigger holding time of the power-on switch satisfies a preset condition, and/or the control circuit further includes a timing unit, the control circuit configured to determine, according to a timing time of the timing unit, whether the allowed trigger time of the first operating element satisfies a preset condition.

In some embodiments, the first control logic includes at least: the trigger holding time of the power-on switch reaches a first holding time, and the control circuit is allowed to enter the activated state; and the second control logic includes at least: the trigger holding time of the power-on switch reaches a second holding time, and the control circuit is allowed to enter the activated state; where the second holding time is greater than the first holding time, and the second holding time is greater than or equal to three times the first holding time.

In some embodiments, the first control logic further includes: when the control circuit enters the activated state, an allowed trigger time of the first operating element is configured within a first preset time, and the control circuit receives the motor starting signal within the first preset time, and controls the current of the power supply to flow to the motor, to cause the motor to drive the working portion to work; and the second control logic includes at least: when the control circuit enters the activated state, an allowed trigger time of the first operating element is configured within a second preset time, andthe control circuit receives the motor starting signal within the second preset time, and controls the current of the power supply to flow to the motor, to cause the motor to drive the working portion to work, where the second preset time is less than the first preset time.

In some embodiments, the second control logic includes at least: an allowed trigger time of the motor starting switch is configured as a preset fixed time point at an interval from when the control circuit enters the activated state, the control circuit is allowed to receive the motor starting signal at the fixed time point, to control the current of the power supply to flow to the motor, to cause the motor to drive the working portion to work.

In some embodiments, the second holding time is greater than or equal to 2s; and the second preset time is less than or equal to 5s.

In some embodiments, the second control logic includes at least: an allowed trigger time of the first operating element is configured as a fixed time point at an interval of a first preset time in which the control circuit enters the activated state, the control circuit is allowed to receive the motor starting signal at the fixed time point, to control the current of the power supply to flow to the motor, to cause the motor to drive the working portion to work.

In some embodiments, the motor starting switch further includes an unlocking element, and the unlocking element is configured to output an unlocking signal in response to an operation by the user; the first control logic includes at least: the control circuit enters the activated state, and a continuous trigger time in which the unlocking element is triggered until the control circuit receives the unlocking signal reaches a third holding time, and the control circuit is allowed to receive the motor starting signal, to control the current of the power supply to flow to the motor according to the motor starting signal, to cause the motor to drive the working portion to work; and the second control logic includes at least: the control circuit enters the activated state, and the continuous trigger time in which the unlocking element is triggered until the control circuit receives the unlocking signal reaches a fourth holding time, and the control circuit is allowed to receive the motor starting signal, to control the current of the power supply to flow to the motor according to the motor starting signal, to cause the motor to drive the working portion to work; where the fourth holding time is greater than the third holding time, and the fourth holding time is greater than or equal to three times the third holding time.

In some embodiments, the motor starting switch further includes an unlocking element, and the unlocking element is configured to output an unlocking signal in response to an operation by the user, and the control circuit is allowed to receive the motor starting signal after receiving the unlocking signal; and the second control logic includes at least: the control circuit enters the activated state, .

In some embodiments, the electric tool further includes a power supply mounting portion, configured to mount a power supply, the power supply includes a battery pack, the battery pack is detachably connected to the power supply mounting portion to supply power to the electric tool, and the control circuit enters an activated state in response to that the battery pack is mounted to the power supply mounting portion; the motor starting switch includes an unlocking element and a first operating element, the unlocking element outputs an unlocking signal in response to an operation by the user, and the first operating element outputs a motor starting signal in response to an operation by the user; the first control logic further includes: the control circuit enters the activated state, and a continuous trigger time in which the unlocking element is triggered until the control circuit receives the unlocking signal reaches a third holding time, and the control circuit is allowed to receive the motor starting signal, and controls the current of the power supply to flow to the motor according to the motor starting signal, to cause the motor to drive the working portion to work; and the second control logic further includes: the control circuit enters the activated state, and the continuous trigger time in which the unlocking element is triggered until the control circuit receives the outputted unlocking signal reaches a fourth holding time, and the control circuit is allowed to receive the motor starting signal, and controls the current of the power supply to flow to the motor according to the motor starting signal, to cause the motor to drive the working portion to work; where the fourth holding time is greater than the third holding time, and the fourth holding time is greater than or equal to three times the third holding time.

In some embodiments, the first control logic further includes: the control circuit is allowed to receive the motor starting signal within a first preset time; and the second control logic further includes: the control circuit is allowed to receive the motor starting signal in a second preset time, where the second preset time is less than the first preset time.

In some embodiments, the second control logic further includes: the control circuit is allowed to receive the motor starting signal at a fixed time point at an interval of a preset time since the fourth holding time is reached.

In some embodiments, the control circuit allows the motor to start working at least at a first rotational speed when the signal unit feeds back the first state signal; and the control circuit allows the motor to start working at least at a second rotational speed when the signal unit feeds back the second state signal, where the second rotational speed is less than or equal to one third of the first rotational speed.

In some embodiments, the second rotational speed is less than or equal to one fifth of the first rotational speed.

In some embodiments, the control circuit is further configured to control the motor to stop after operating at the second rotational speed for a preset time, where the preset time is less than or equal to 5s.

In some embodiments, the electric tool includes a hand push lawn mower; and the motor includes a cutting motor, the working portion includes a cutting portion, and the cutting motor is configured to drive the cutting portion to move, to perform cutting work; and/or the motor includes a self-driving motor, the working portion includes a moving assembly, and the self-driving motor is configured to drive the moving assembly to move, to drive the main unit to move.

In some embodiments, the signal unit includes a micro switch, the signal unit is configured as a micro switch, the micro switch includes a trigger portion and a switching member, the switching member is controlled by the trigger portion, and the micro switch switches between an off state and an on state in response to a change of the push handle component between the working position area and the non-working position area, where the micro switch is in the off state or the on state, and the signal unit feeds back the first state signal or the second state signal.

In some embodiments, the signal unit is configured as a sensor, the sensor includes a first component and a second component, one of the first component and the second component is disposed on the main unit, the other is disposed on the push handle component or the adjustment member, and the first component is configured to feed back the first state signal or the second state signal to the control circuit according to an intensity of a sensed signal emitted by the second component.

A control method for a motor of an electric tool is provided, where the electric tool includes: a main unit; a functional component, including a working portion and a motor configured to drive the working portion to work; a motor starting switch, configured to control the motor in response to an operation by a user; a push handle component, connected to the main unit, where the push handle component is rotatable around the main unit, a rotation area of the push handle component includes a working position area and a non-working position area, and the push handle component is fixed relative to the main unit and is used for the user to operate to push the main unit to move when the push handle component is in the working position area; an adjustment member and an engagement member, where the push handle component is locked to the main unit when the adjustment member is engaged with the engagement member, and the push handle component is unlocked from the main unit and is rotatable around the main unit when the adjustment member is disengaged from the engagement member; a signal unit, where the signal unit is configured to feed back different state signals in response to position changes of the push handle component, the signal unit feeds back a first state signal when the push handle component is in the working position area and the push handle component is locked relative to the main unit, and the signal unit feeds back a second state signal when the push handle component is in the non-working position area; and
the control method for a motor includes: receiving the state signals fed back by the signal unit; controlling the motor to start working according to a first control logic when the state signal is the first state signal; and controlling the motor to start working according to a second control logic when the state signal is the second state signal, where the second control logic is different from the first control logic.

In some embodiments, the control circuit includes a power-on switch, the power-on switch is triggered in response to an operation by the user, to switch the control circuit between an inactivated state and an activated state, the control circuit allows current of a power supply to flow to the motor when the control circuit is in the activated state, and the control circuit prohibits the current of the power supply from flowing to the motor when the control circuit is in the inactivated state, where a time in which the power-on switch is triggered and keeps a triggered state until the control circuit is switched from the inactivated state to the activated state is defined as a trigger holding time of the power-on switch; the motor starting switch includes a first operating element, the first operating element is configured to output a motor starting signal in response to an operation by the user, the control circuit is in the activated state, the motor starting switch is triggered, and the control circuit controls the current of the power supply to flow to the motor, to cause the motor to drive the working portion to work, where the control circuit enters the activated state, and allows the motor starting signal to be received in a preset time, and the preset time is defined as an allowed trigger time of the motor starting switch; and trigger holding times of the power-on switch are different under the first control logic and the second control logic; and/or allowed trigger times of the motor starting switch are different under the first control logic and the second control logic.

In some embodiments, the first control logic includes at least: it is determined whether a trigger holding time of the power-on switch reaches a first holding time; and the first holding time is reached, and the control circuit is allowed to enter the activated state; and the second control logic includes at least: it is determined whether a trigger holding time of the power-on switch reaches a second holding time; and the second holding time is reached, and the control circuit is allowed to enter the activated state, where the second holding time is greater than or equal to three times the first holding time.

In some embodiments, the first control logic further includes: the control circuit enters the activated state, and is allowed to receive the motor starting signal within a first preset time; and controls, when receiving the motor starting signal, the current of the power supply to flow to the motor, to cause the motor to drive the working portion to work; and
the second control logic includes at least: the control circuit enters the activated state, and is allowed to receive the motor starting signal within a second preset time; and controls, when receiving the motor starting signal, the current of the power supply to flow to the motor, to cause the motor to drive the working portion to work, where the second preset time is less than the first preset time.

In some embodiments, the second control logic includes at least: the control circuit is allowed to receive the motor starting signal at a fixed point at an interval of a preset time since the control circuit enters the activated state; and controls, when receiving the motor starting signal, the current of the power supply to flow to the motor, to cause the motor to drive the working portion to work, where the second preset time is less than the first preset time.

In some embodiments, the second holding time is greater than or equal to 2s; and the second preset time is less than or equal to 5s.

In some embodiments, the motor starting switch further includes an unlocking element, and the unlocking element includes a stop member that is operatably coupled to the first operating element, to prevent the first operating element from being directly actuated.

In some embodiments, the motor starting switch further includes an unlocking element, and the unlocking element outputs an unlocking signal in response to an operation by the user; the first control logic includes at least: the control circuit enters the activated state, and determines whether the continuous trigger time of the unlocking element reaches a third holding time; and is allowed to receive the motor starting signal when the third holding time is reached, and controls, when receiving the motor starting signal, the current of the power supply to flow to the motor, to cause the motor to drive the working portion to work; and the second control logic includes at least: the control circuit enters the activated state, and determines whether the continuous trigger time of the unlocking element reaches a fourth holding time; and is allowed to receive the motor starting signal when the fourth holding time is reached, and controls, when receiving the motor starting signal, the current of the power supply to flow to the motor, to cause the motor to drive the working portion to work; and where the fourth holding time is greater than the third holding time, and the fourth holding time is greater than or equal to three times the third holding time.

In some embodiments, the motor starting switch further includes an unlocking element, and the unlocking element is configured to output an unlocking signal in response to an operation by the user, and the control circuit is allowed to receive the motor starting signal after receiving the unlocking signal; and the second control logic includes at least: the control circuit enters the activated state, and an interval of a second preset time exists between when the control circuit enters the activated state and when the control circuit receives the unlocking signal.

In some embodiments, the first control logic further includes: receiving of the motor starting signal within the first preset time is allowed since a time in which the unlocking element is triggered and keeps the triggered state reaches the third holding time; and
the second control logic further includes: receiving of the motor starting signal within the second preset time is allowed since a time in which the unlocking element is triggered and keeps the triggered state reaches the fourth holding time, or receiving of the motor starting signal at a fixed time point at an interval of a preset time is allowed since a time in which the unlocking element is triggered and keeps the triggered state reaches the fourth holding time, where the second preset time is less than the first preset time.

In some embodiments, the electric tool further includes a power supply mounting portion, a power supply includes a battery pack, the battery pack is detachably mounted to the power supply mounting portion to supply power to the electric tool, and the control circuit enters an activated state in response to that the battery pack is mounted to the battery pack mounting portion; the control circuit includes a motor starting switch, the motor starting switch includes an unlocking element and a first operating element, the unlocking element is configured to output an unlocking signal in response to a trigger by the user, and the first operating element is configured to output a motor starting signal in response to a trigger by the user; the first control logic includes at least: the control circuit enters the activated state, and determines whether the continuous trigger time of the unlocking element reaches a third holding time; and is allowed to receive the motor starting signal when the third holding time is reached, and controls, when receiving the motor starting signal, the current of the power supply to flow to the motor, to cause the motor to drive the working portion to work; and the second control logic includes at least: the control circuit enters the activated state, and determines whether the continuous trigger time of the unlocking element reaches a fourth holding time; and is allowed to receive the motor starting signal when the fourth holding time is reached, and controls, when receiving the motor starting signal, the current of the power supply to flow to the motor, to cause the motor to drive the working portion to work, where the fourth holding time is greater than the third holding time, and the fourth holding time is greater than or equal to three times the third holding time.

In some embodiments, the first control logic further includes: receiving of the motor starting signal within the first preset time is allowed since a time in which the unlocking element is triggered and keeps the triggered state reaches the third holding time; and the second control logic further includes: receiving of the motor starting signal within the second preset time is allowed since a time in which the unlocking element is triggered and keeps the triggered state reaches the fourth holding time, where the second preset time is less than the first preset time; or receiving of the motor starting signal at a fixed time point at an interval of a preset time is allowed since a time in which the unlocking element is triggered and keeps the triggered state reaches the fourth holding time.

In some embodiments, the control method further includes: allowing, when the first state signal is received, a rotational speed during starting of the motor to be a first rotational speed; and allowing, when the second state signal is received, a rotational speed during starting of the motor to be a second rotational speed, where the second rotational speed is less than or equal to one third of the first rotational speed.

In some embodiments, the control method further includes: controlling the motor to stop after the motor is controlled to rotate at the second rotational speed for a preset time.

An electric tool is provided, including: a main unit; a functional component, including a working portion and a motor configured to drive the working portion to work; a motor starting switch, configured to control the motor in response to an operation by a user; a push handle component, connected to the main unit, where the push handle component is rotatable around the main unit, a rotation area of the push handle component includes a working position area and a non-working position area, and the push handle component is fixed relative to the main unit and is used for the user to operate to push the main unit to move when the push handle component is in the working position area; an adjustment member and an engagement member, where the push handle component is locked to the main unit when the adjustment member is engaged with the engagement member, and the push handle component is unlocked from the main unit and is rotatable around the main unit when the adjustment member is disengaged from the engagement member; a signal unit, where the signal unit is configured to feed back different state signals in response to position changes of the push handle component, the signal unit feeds back a first state signal when the push handle component is in the working position area and the push handle component is locked relative to the main unit, and the signal unit feeds back a second state signal when the push handle component is in the non-working position area; and a control circuit, configured to receive the state signals fed back by the signal unit, where the control circuit allows, when receiving the first state signal, the motor to start working at a first rotational speed, and the control unit allows, when receiving the second state signal, the motor to start working at a second rotational speed, where the second rotational speed is less than or equal to one third of the first rotational speed.

**In** some embodiments, the control circuit is further configured to control the motor to stop after operating at the second rotational speed for a preset time, where the preset time is less than or equal to 5s.

A control method for a motor of an electric tool is provided, where the electric tool includes: a main unit; a functional component, including a working portion and a motor configured to drive the working portion to work; a motor starting switch, configured to control the motor in response to an operation by a user; a push handle component, connected to the main unit, where the push handle component is rotatable around the main unit, a rotation area of the push handle component includes a working position area and a non-working position area, and the push handle component is fixed relative to the main unit and is used for the user to operate to push the main unit to move when the push handle component is in the working position area; an adjustment member and an engagement member, where the push handle component is locked to the main unit when the adjustment member is engaged with the engagement member, and the push handle component is unlocked from the main unit and is rotatable around the main unit when the adjustment member is disengaged from the engagement member; a signal unit, where the signal unit is configured to feed back different state signals in response to position changes of the push handle component, the signal unit feeds back a first state signal when the push handle component is in the working position area and the push handle component is locked relative to the main unit, and the signal unit feeds back a second state signal when the push handle component is in the non-working position area; and the control method includes: allowing, when receiving the first state signal, the motor to start working at least at a first rotational speed; and allowing, when receiving the second state signal, the motor to start working at least at a second rotational speed, where the second rotational speed is less than or equal to one third of the first rotational speed.

An electric tool is provided, including: a main unit; a functional component, including a working portion and a motor configured to drive the working portion to work; a motor starting switch, configured to control the motor in response to an operation by a user; a push handle component, connected to the main unit, where the push handle component is rotatable around the main unit, a rotation area of the push handle component includes a working position area and a non-working position area, and the push handle component is fixed relative to the main unit and is used for the user to operate to push the main unit to move when the push handle component is in the working position area; an adjustment member and an engagement member, where the push handle component is locked to the main unit when the adjustment member is engaged with the engagement member, and the push handle component is unlocked from the main unit and is rotatable around the main unit when the adjustment member is disengaged from the engagement member; a signal unit, where the signal unit is configured to feed back different state signals in response to position changes of the push handle component, the signal unit feeds back a first state signal when the push handle component is in the working position area and the push handle component is locked relative to the main unit, and the signal unit feeds back a second state signal when the push handle component is in the non-working position area; and a control circuit, configured to receive the state signals fed back by the signal unit and adjust, according to the state signals, a control logic for starting the motor; where the control circuit controls, according to a first control logic, the motor to start working when the control circuit receives the first state signal, and the control circuit controls, according to a second control logic, the motor to start working when the control circuit receives the second state signal, where the second control logic is different from the first control logic; and the control circuit further allows, when receiving the first state signal, the motor to start working at a first rotational speed, and the control unit further allows, when receiving the second state signal, the motor to start working at a second rotational speed, where the second rotational speed is less than or equal to one third of the first rotational speed.

In an embodiment, the control method further includes: controlling the motor to stop after the motor is controlled to rotate at the second rotational speed for a preset time.

### BRIEF DESCRIPTION OF THE DRAWINGS

The accompanying drawings forming a part of the present invention are used to provide further understanding of the present invention, and the exemplary embodiments of the present invention and descriptions thereof are used to explain the present invention but do not constitute an improper limitation on the present invention.

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an electric tool in a working state in at least one embodiment of this application;
FIG. 2 is a schematic structural diagram of an electric tool in an intermediate retracted state in at least one embodiment of this application;
FIG. 3 is a schematic diagram of a control circuit module of an electric tool in at least one embodiment of this application;
FIG. 4 is a partial schematic structural diagram of a push handle component in at least one embodiment of this application;
FIG. 5 is a structural cross-sectional view of an electric tool when an operating member is in a locked state in at least one embodiment of this application;
FIG. 6 is a structural cross-sectional view of an electric tool when an operating member is in an unlocked state in at least one embodiment of this application;
FIG. 7 is a schematic structural diagram of an adjustment component in at least one embodiment of this application;
FIG. 8 is a schematic structural exploded view of an adjustment component in at least one embodiment of this application;
FIG. 9 is a schematic structural diagram of a base in at least one embodiment of this application;
FIG. 10 is a schematic structural diagram of an adjustment member in at least one embodiment of this application;
FIG. 11 is a schematic structural diagram of an electric tool in a working state in at least one embodiment of this application;
FIG. 12 is a schematic structural diagram of an electric tool in an intermediate retracted state in at least one embodiment of this application;
FIG. 13 is a schematic structural diagram of an electric tool in a fully retracted state in at least one embodiment of this application;
FIG. 14 is a schematic diagram of analysis of a signal coverage area of a second component in at least one embodiment of this application;
FIG. 15 is a first flowchart of control of starting of an electric tool in at least one embodiment of this application;
FIG. 16 is a second flowchart of control of starting of an electric tool in at least one embodiment of this application;
FIG. 17 is a third flowchart of control of starting of an electric tool in at least one embodiment of this application;
FIG. 18 is a fourth flowchart of control of starting of an electric tool in at least one embodiment of this application.

### DETAILED DESCRIPTION

To make the foregoing objects, features and advantages of the present invention more comprehensible, detailed description is made to specific implementations of the present invention below with reference to the accompanying drawings. In the following description, many specific details are described for fully understanding the present invention. However, the present invention may be implemented in many other manners different from those described herein. A person skilled in the art may make similar improvements without departing from the connotation of the present invention. Therefore, the present invention is not limited to the specific embodiments disclosed below.

This application provides an electric tool, to reduce a probability of accidentally starting the electric tool in a process of retracting a push handle component, and improve safety of the electric tool. The electric tool in this application may be a hand push lawn mower, or may be another type of manual electric tool, and is not limited to a hand push lawn mower.

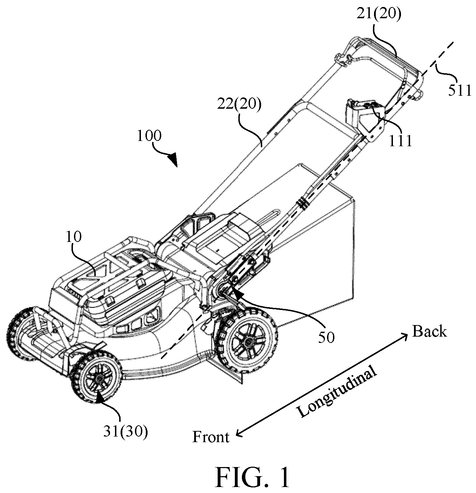

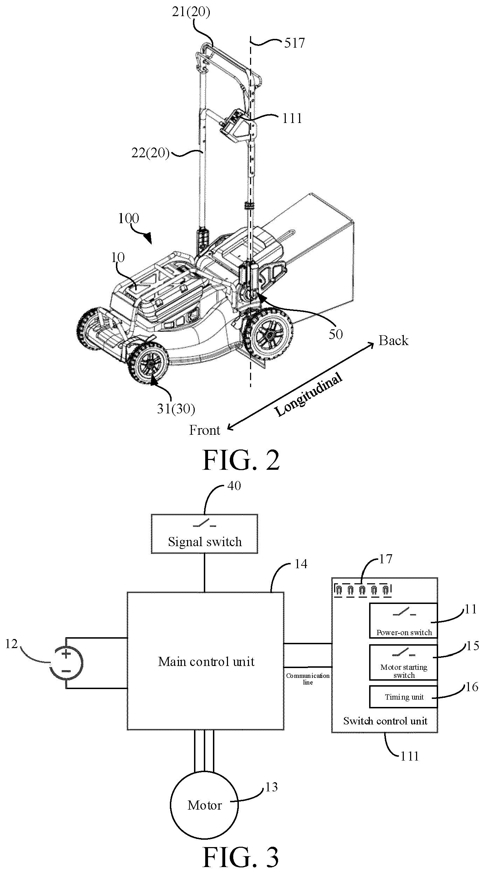

Referring to FIG. 1 and FIG. 2, an electric tool 100 includes: a main unit 10, a push handle component 20, a functional component 30, a motor starting switch 15, a signal unit 40, and a control circuit (not shown in FIG. 1 and FIG. 2).

The functional component 30 is disposed on the main unit 10. The functional component 30 includes a motor 13 and a working portion 31. The motor 13 is configured to drive the working portion 31 to drive the main unit 10 to move in a set path or working area, and/or execute a working task. The motor starting switch 15 is configured to control, in response to an operation by a user, the motor 13 to start. The electric tool further includes a power supply mounting portion, configured to mount a power supply. The power supply includes a battery pack. The battery pack is detachably connected to the power supply mounting portion, to supply power to the electric tool. After the entire electric tool is powered on, the motor starting switch 15 can control, in response to an operation by the user, the motor 13 to start.

The push handle component 20 is connected to the main unit 10 and can rotate around the main unit 10. The push handle component 20 has a first end and a second end. The first end of the push handle component 20 is pivotably connected to the main unit 10. The second end of the push handle component 20 is provided for the user to hold and push the electric tool 100 to walk in some embodiments. In this implementation, the push handle component 20 includes a push rod 21 and an extension rod 22. The push rod 21 is connected to the main unit 10 by using the extension rod 22. The push rod 21 is disposed at the second end of the push handle component 20. The push rod 21 is provided for the user to hold, to apply a push force to the electric tool 100 and assist the electric tool 100 in walking. In addition, the user can change a moving direction of the electric tool 100 by pushing the push rod 21. For ease of retraction and transportation, the push handle component 20 is further designed as a telescopic structure in some embodiments. For example, the push rod 21 is slidably sleeved on the extension rod 22 in some embodiments.

A rotation area of the push handle component 20 includes a working position area and a non-working position area other than the working position area. The electric tool is placed on the ground, and a direction parallel to a forward direction of the electric tool is defined as a longitudinal direction of the electric tool (referring to FIG. 1 and FIG. 2). In FIG. 1 and FIG. 2, a left side of the longitudinal direction of the electric tool is defined as a front side of the electric tool, and a right side of the longitudinal direction of the electric tool is defined as a rear side of the electric tool. When the push handle component 20 is in the working position area, the second end of the push handle component 20 is located on the back side of the main unit 10 relative to the first end. When the push handle component 20 is in a position in at least part of the non-working position area, the second end of the push handle component 20 is located on the front side of the main unit 10 relative to the first end. Further, the working position area is generally understood in some embodiments as that, in the rotation area, the push handle component 20 can be locked in a preset position of the main unit 10, so that the user can push the main unit 10 to move on a plane and control the electric tool to execute a working task. In some embodiments, the main unit 10 is provided with a plurality of preset positions in the working position area, and the push handle component 20 is locked in one of the preset positions, or is unlocked from a preset position and rotated to another preset position. The non-working position area is generally understood in some embodiments as that, in the rotation area, the push handle component 20 is rotated and folded relative to the main unit 10 to a storage state (for example, FIG. 2, FIG. 12, and FIG. 13). When the push handle component 20 is rotated to the non-working position area, space occupied by the electric tool as a whole can be reduced, thereby facilitating transportation and storage of the electric tool. For example, as shown in FIG. 1, when the push handle component 20 is fixed in a first position 511, and the push handle component 20 is in the working position area, the push handle component 20 is in a working state. As shown in FIG. 2, when the push handle component 20 is fixed in a third position 517, and the push handle component 20 is in the non-working position area, the push handle component 20 is in a retracted state. The push handle component 20 is rotated from the first position 511 to the third position 517 in some embodiments, or is rotated from the third position 517 to the first position 511 in some embodiments. Certainly, FIG. 1 and FIG. 2 are merely an example. During actual operation, a rotation angle corresponding to a range of rotation of the push handle component 20 around the main unit is greater than or equal to 90° in some embodiments.

The electric tool 100 further includes an adjustment component 50, configured to adjust a rotational position of the push handle component 20 relative to the main unit 10. The adjustment component 50 includes an engagement member 51 and an adjustment member 52. When the engagement member 51 is engaged with the adjustment member 52, the push handle component 20 is locked relative to the main unit 10. When the engagement member 51 is disengaged from the adjustment member 52, the push handle component 20 is unlocked from the main unit 10, and is operated by an operator to rotate around the main unit 10 in some embodiments. The user can fix the push handle component 20 or unfix the push handle component 20 by operating the engagement member 51 or the adjustment member 52. For example, one of the engagement member 51 and the adjustment member 52 is disposed on the main unit 10, and the other is disposed on the push handle component 20 in some embodiments.

When the electric tool 100 needs to be transported, the user moves to the side of the main unit 10 of the electric tool 100 to perform a rotation action on the push handle component 20, to rotate the push handle component 20 to the non-working position area for retraction. A switch assembly is disposed on the push handle component 20, and the switch assembly is configured to control the motor to start. If the user accidentally triggers the switch assembly when rotating the push handle component 20, the electric tool 100 is powered on and started in some embodiments. In this case, because the user is relatively close to the working portion, the user is put in danger.

Based on this, the electric tool 100 provided in some embodiments is further provided with a signal unit 40 on the main unit 10 and/or the push handle component 20. The signal unit 40 can feed back different state signals in response to position changes of the push handle component 20. The signal unit 40 feeds back a first state signal when the push handle component 20 is in the working position area and the push handle component is locked relative to the main unit, and the signal unit 40 feeds back a second state signal when the push handle component 20 is in the non-working position area.

Further, when the push handle component 20 is in the working position area, and the push handle component 20 is unlocked from the main unit 10, configuration forms of the signal unit 40 are different, and the signal unit in different configuration forms is engaged with the push handle component 20 in different manners. As a result, the signal unit 40 can feed back the first state signal, or can feed back the second state signal. The signal unit 40 can feed back the first state signal or can feed back the second state signal when the push handle component 20 is in the working position area and the push handle component 20 is unlocked from the main unit 10. Specific implementation structures of feeding back different state signals are described in detail in subsequent paragraphs.

The signal unit 40 is a mechanical trigger switch in some embodiments. When the push handle component 20 moves to a preset area (the working position area or the non-working position area), the trigger switch is triggered or released in response to position changes of the push handle component 20, to feed back different state signals. Alternatively, the signal unit 40 is an electric sensing unit in some embodiments. When a position of the push handle component 20 changes, intensities of sensing signals generated by the electric sensing unit are different. Sensing signals of different intensities represent different state signals. For example, the first state signal is fed back by the sensing switch when the sensing signal is lower than a preset threshold, and the second state signal is fed back by the sensing switch when the sensing signal is higher than the preset threshold, or vice versa. A specific structure of the signal unit 40 is described in detail below.

The control circuit is connected to the signal unit 40, and is configured to identify a current position of the push handle component 20 according to the first state signal and the second state signal that are fed back by the signal unit 40, and correspondingly adjust a control logic for starting the motor. In some embodiments, the control circuit includes a main control unit. The main control unit is a component having analysis, calculation, and control functions in some embodiments. For example, the main control unit is, but is not limited to, a programmable logic controller (PLC), an electronic control unit (ECU), or a single-chip microcomputer in some embodiments. The main control unit is connected to the signal unit 40, and is configured to receive a state signal fed back by the signal unit 40, and control operating of the motor according to the state signal. The main control unit controls, by using a first control logic, the motor to start working when the main control unit receives the first state signal, indicating that the push handle component 20 is currently in the working position area, and the main control unit controls, by using a second control logic, the motor to start working when the main control unit receives the second state signal, where the second control logic is different from the first control logic. It is understood in some embodiments that the control circuit not only includes the main control unit, but also includes another circuit in some embodiments, for example, any one of or a combination of a plurality of circuits such as a switch control circuit and a power supply circuit. The control circuit is understood as an entire circuit in some embodiments.

In some embodiments, the signal unit 40 is configured to detect a position of the push handle component 20, and the control circuit is configured to control, according to a detection result of the signal unit 40, the motor 13 to start by using different control logics when the push handle component 20 is in different position areas, so that difficulties of starting the motor 13 are different when the push handle component 20 is in different position areas. When the push handle component 20 is in the non-working position area, the control circuit controls, by using the second control logic, the motor to start. By changing an action sequence of the switch assembly and/or prolonging a power-on time after the switch assembly is triggered, the motor is more difficult to start under the second control logic compared with the first control logic, thereby reducing a probability of accidentally starting the electric tool because the user accidentally triggers the switch assembly when the push handle component 20 is in the retracted state, reducing a use risk of the user, and improving safety of the electric tool.

In some embodiments, as shown in FIG. 3, the electric tool further includes a power-on switch 11. The power-on switch 11 is triggered in response to an operation by the user, so that the control circuit switches between an inactivated state and an activated state. When the control circuit is in the activated state, the control circuit allows current of the power supply 12 to flow to the motor 13. When the control circuit is in the inactivated state, the control circuit prohibits the current of the power supply 12 from flowing to the motor 13. The motor starting switch 15 includes a first operating element 62, and the first operating element 62 is triggered in response to an operation by the user, to output a motor starting signal. Trigger holding times of the power-on switch 11 are different under the first control logic and the second control logic; and/or allowed trigger times of the first operating element 62 are different under the first control logic and the second control logic.

Specifically, when the control circuit is in the activated state, allowing the current of the power supply 12 to flow to the motor 13 is understood in some embodiments as that a power supply circuit from the power supply 12 to the motor 13 can be turned on under a specific condition. In some embodiments, the power supply circuit from the power supply 12 to the motor 13 is controlled by the main control unit 14. When the control circuit is in the activated state, the main control unit 14 controls the power supply circuit from the power supply 12 to the motor 13 to be turned on only when receiving the motor starting signal, so that the motor 13 drives the working portion to work. When the control circuit is in the inactivated state, the main control unit 14 is configured to not receive the motor starting signal, and therefore, cannot control the power supply circuit from the power supply 12 to the motor 13 to be turned on. Alternatively, the main control unit 14 is configured to not control the power supply circuit from the power supply 12 to the motor 13 to be turned on even if the motor starting signal is received.

To reduce a probability of accidentally starting the motor 13 when the push handle component 20 is in the non-working position area, in some embodiments, under the first control logic and the second control logic, it is preset that the trigger holding times of the power-on switch 11 are different, so that times of allowing the control circuit to enter the activated state are different; it is preset that allowed trigger times of the first operating element 62 are different, so that times of allowing the main control unit 14 to receive the motor starting signal are different; or it is preset that trigger holding times of the power-on switch 11 are different and allowed trigger times of the first operating element 62 are different.

The trigger holding time of the power-on switch 11 is understood in some embodiments as a time in which the power-on switch 11 is triggered and keeps the triggered state until the control circuit is switched from the inactivated state to the activated state. For example, the power-on switch 11 is a button switch. Only after the user presses the button switch and keeps the pressed state until the preset trigger holding time is reached, the control circuit enters the activated state. Alternatively, the power-on switch 11 is a rotation switch. Only after the user rotates the power-on switch to a preset angle, and keeps the rotated switch at the preset angle until a preset trigger holding time is reached, the control circuit enters the activated state.

The allowed trigger time of the first operating element 62 is understood in some embodiments as a preset time in which the main control unit 14 is allowed to receive the motor starting signal since the control circuit enters the activated state. The preset time is a preset period of time in some embodiments, or is a fixed time point in some embodiments. For example, the first operating element 62 is a trigger in some embodiments. If the user pulls the trigger within 10s (that is, within the preset period of time) since the control circuit enters the activated state, the motor 13 is controlled to start in some embodiments. Alternatively, the motor 13 can be controlled to start only if the user pulls the trigger at the 10th second (that is, a fixed time point at an interval of a preset time) since the control circuit enters the activated state.

In some embodiments, it is set that under the first control logic and the second control logic, the control circuit responds to different trigger holding times of the power-on switch 11, and/or responds to different allowed trigger times of the first operating element 62, so that when the push rod is in the working position area, the user can conveniently trigger the power-on switch 11 and the first operating element 62 to start the motor 13 to work, and when the push rod is in the non-working position area, the operation difficulty in triggering the power-on switch 11 and the motor starting switch 15 is increased, and the probability of powering on and starting the motor 13 is reduced, thereby improving the safety of the electric tool when the push handle component 20 is in the retracted state.

There are a plurality of implementations of the first control logic and the second control logic. Several examples are used as an example for description below.

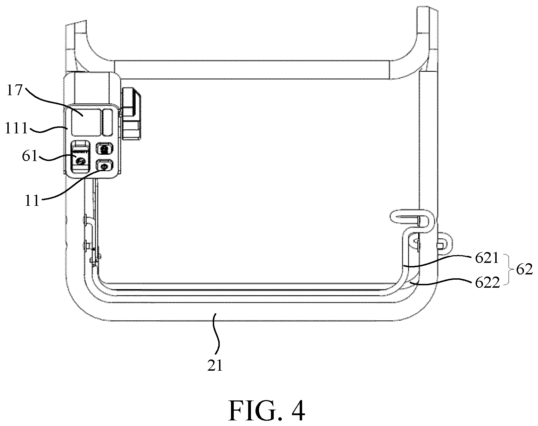

In a first example, as shown in FIG. 3 and FIG. 4, the first control logic includes at least: a trigger holding time of the power-on switch 11 reaches a first holding time, and the control circuit is allowed to enter the activated state. the second control logic includes at least: a trigger holding time of the power-on switch 11 reaches a second holding time, and the control circuit is allowed to enter the activated state. The second holding time is greater than the first holding time.

Specifically, the control circuit includes a timing unit 16, and the control circuit determines, according to a timing time of the timing unit 16, whether a trigger holding time of the power-on switch 11 satisfies a preset condition (that is, whether the first holding time or the second holding time is reached). When the trigger holding time satisfies the preset condition, the control circuit is allowed to enter the activated state.

In some embodiments, the timing unit 16 is configured to start timing from a moment when the power-on switch 11 is triggered, and send a timing signal to the main control unit 14 when the timing time reaches a preset first holding time or second holding time, so that the control circuit enters the activated state.

The timing unit is disposed outside the main control unit 14 and connected to the main control unit 14 in some embodiments, or is integrated in the main control unit 14 in some embodiments. In a case, the timing unit 16 is disposed outside the main control unit 14. As shown in FIG. 3, the timing unit 16, the power-on switch 11, and the first operating element 62 are disposed on a switch control unit 111 of the control circuit together. When the switch control unit 111 detects that the power-on switch 11 is triggered, the switch control unit 111 controls the timing unit 16 to start timing, and sends a timing signal to the main control unit 14 when the timing time reaches the preset first holding time or second holding time. In another case, the timing unit 16 is alternatively integrated in the main control unit 14 in some embodiments. The power-on switch 11 and the motor starting switch 15 are disposed in the switch control unit 111. At a moment when the power-on switch 11 is triggered, the switch control unit 111 controls the power supply circuit from the power supply 12 to the main control unit 14 to be turned on. The main control unit 14 is powered up and controls the timing unit 16 to start timing. When the timing time reaches the preset trigger holding time, the control circuit enters the activated state.

Further, to help the user learn that the control circuit enters the activated state, some embodiments further provide a display unit 17. The display unit 17 is connected to the switch control unit 111, and is controlled by the switch control unit 111. When the timing time of the timing unit 16 reaches the preset first holding time or second holding time, the switch control unit 111 controls the display unit 17 to light up, to remind the operator that the control circuit enters the activated state, so that the operator can trigger the first operating element 62 after the display unit 17 lights up, to start the motor. By disposing the display unit 17, not only the operator is reminded of the time at which the motor starting switch can be operated when the push handle component 20 is in the working position area in some embodiments, but also the operator is reminded that the current entire control circuit is activated when the push handle component 20 is in the non-working position area in some embodiments, to avoid a case that the motor is accidentally started because the operator further operates the first operating element 62, thereby further improving safety of the electric tool.

In this example, the second holding time is greater than or equal to three times the first holding time. Preferably, the second holding time is greater than or equal to five times the first holding time. For example, the second holding time is three times, five times, 20 times, 50 times, or 100 times the first holding time in some embodiments. A larger second holding time indicates a longer time in which the power-on switch 11 needs to be continuously triggered, and a lower probability of accidental triggering by the user.

Specifically, the second holding time is greater than or equal to 2s, and the first holding time is less than or equal to 0.6s. For example, the first holding time is 0s, 0.1s, 0.3s, 0.5s, or 0.6s in some embodiments, and the second holding time is 2 s, 5s, 10s, 15s, 20s, or 30s in some embodiments.

For example, from the perspective of operations by the user, when the push handle component 20 is in the working position area, the user can cause the control circuit to enter the activated state only by triggering the power-on switch for 0.3s, and then the user can control the motor 13 to start working only by triggering the first operating element 62, to conveniently start the electric tool. When the push handle component 20 rotates to the non-working position area, the user can cause the control circuit to be in the activated state only by continuously pressing or rotating the power-on switch for 30s, and then can control the motor 13 to start working only by triggering the first operating element 62. For the user, the switch can be usually turned on only by briefly pressing the switch. Therefore, the user substantially does not conceive that the control circuit can be activated only by pressing the power-on switch continuously for 30s. In addition, even if the user triggers the power-on switch accidentally, the power-on switch is not continuously triggered accidentally for a long time. When the push handle component 20 is in the non-working position area, the user cannot activate the control circuit by habitually briefly triggering the power-on switch 11. Therefore, the solution provided by this embodiment can reduce a probability that the motor is started because the user triggers the power-on switch accidentally, and improve use safety when the push handle component 20 is folded.

In the foregoing embodiments, through the configuration that the trigger holding times of the power-on switch 11 are different under the first control logic and the second control logic, a probability that the motor is accidentally started is lower under the second control logic.

In a second example, the first control logic includes at least: the control circuit enters the activated state, an allowed trigger time of the first operating element 62 is configured within a first preset time. the second control logic includes at least: the control circuit enters the activated state, an allowed trigger time of the first operating element 62 is configured within a second preset time.

Alternatively, the second control logic includes: an allowed trigger time of the first operating element 62 is configured as a fixed time point at an interval of a preset time in which the control circuit enters the activated state, the control circuit is allowed to receive the motor starting signal at the fixed time point, to control the current of the power supply 13 to flow to the motor 13, to cause the motor 13 to drive the working portion 31 to work.

Specifically, when the push handle component 20 is in the working position area, the operator first triggers the power-on switch 11, so that the control circuit enters the activated state. When the control circuit enters the activated state, the timing unit 16 starts timing, and the main control unit 14 is allowed to respond to the motor starting signal. When the timing time of the timing unit 16 reaches the first preset time, the timing unit 16 sends a signal to the main control unit 14, and the main control unit 14 no longer responds to the motor starting signal after receiving the timing signal.

When the push handle component 20 is in the non-working position area, the operator first triggers the power-on switch 11, so that the control circuit enters the activated state. When the control circuit enters the activated state, the timing unit 16 starts timing, and the main control unit 14 is allowed to respond to the motor starting signal. When the timing time of the timing unit 16 reaches the second preset time, the timing unit 16 sends a signal to the main control unit 14, and the main control unit 14 no longer responds to the motor starting signal after receiving the timing signal.

Alternatively, when the push handle component 20 is in the non-working position area, the operator first triggers the power-on switch 11, so that the control circuit enters the activated state. Since the control circuit enters the activated state, the timing unit 16 starts timing. When the timing time reaches a preset fixed time point, the timing unit 16 sends a signal to the main control unit 14, and the main control unit 14 is allowed to respond to the motor starting signal at the fixed time point. When the timing time does not reach the time point or the timing time exceeds the time point, the main control unit 14 does not respond to the motor starting signal, that is, the main control unit 14 cannot receive the motor starting signal, or does not control the motor 13 to start even if the motor starting signal is received.

In this example, the second preset time is less than the first preset time. For example, the second preset time is less than or equal to one fifth, one tenth, or one percent of the first preset time. For example, the second preset time is one fifth or one tenth of the first preset time in some embodiments.

Specifically, the first preset time is greater than or equal to 30s. For example, the first preset time is 30s, 40s, 50s, or 60s in some embodiments. The second preset time is greater than or equal to 0s and less than or equal to 5s. For example, the second preset time is 0s, 0.2 s, 0.3s, 0.5s, 1s, 2s, 3s, 4s, or 5s in some embodiments. If the second preset time is greater than 5s, a probability that the user triggers a driving switch of the motor accidentally is improved.

The preset fixed time point is the 0.5th second, the 1st second, the 5th second, the 10th second, or the like since the control circuit enters the activated state in some embodiments.

That is, from the perspective of operations by the user, when the push handle component 20 is in the working position area, the motor 13 can be powered on to start working by triggering the first operating element 62 within 60s since the user triggers the power-on switch 11 to cause the control circuit to enter the activated state. When the push handle component 20 is in the non-working position area, the motor 13 can be started to work only after the user triggers the first operating element 62 within 0.3s since the user triggers the power-on switch 11 to cause the control circuit to enter the activated state, or only after the first operating element 62 is triggered at the 3rd s since the control circuit enters the activated state. It can be seen that when the push handle component 20 is in the working position area, the user has enough time to trigger the first operating element 62, which can ensure that the user can start the motor when the user intends to start the motor. When the push handle component 20 is in the non-working position area, for the user, the motor can be started to work only by triggering the power-on switch 11 and the first operating element 62 almost simultaneously, or the motor can be started only by triggering the first operating element 62 after timing is performed after the power-on switch 11 is triggered and a timing time reaches a fixed time point. Usually, the user sequentially triggers the power-on switch 11 and the first operating element 62 at a normal speed to control the motor 13 to start. Therefore, it is difficult for the user to conceive that the motor can be started to work only by triggering the power-on switch 11 and the first operating element 62 simultaneously, thereby greatly reducing a probability of accidentally starting the motor.

In this example, when the push rod is in the non-working position area, the allowed trigger time of the first operating element 62 is changed, thereby increasing difficulty in starting the motor 13, so that a probability that the user accidentally starts the motor 13 in a process of folding the push handle component 20 can be reduced, and safety performance can be improved.

In a third example, the first control logic includes at least: a trigger holding time of the power-on switch 11 reaches a first holding time, and the control circuit is allowed to enter the activated state; and the control circuit enters the activated state, and is allowed to receive the motor starting signal within a first preset time. The second control logic includes at least: a trigger holding time of the power-on switch 11 reaches a second holding time, and the control circuit is allowed to enter the activated state; and the control circuit enters the activated state, and is allowed to receive the motor starting signal within a second preset time. The second holding time is greater than the first holding time, and the second preset time is less than the first preset time. Alternatively, the second starting logic includes: a trigger holding time of the power-on switch 11 reaches a second holding time, and the control circuit is allowed to enter the activated state; and the control circuit is allowed to receive the motor starting signal at a fixed time point at an interval of a preset time since the control circuit enters the activated state.

Specifically, when the push handle component 20 is in the working position area, the operator first triggers the power-on switch 11. At the moment of detecting that the power-on switch 11 is triggered, the switch control unit 111 controls the timing unit 16 to start timing. The switch control unit 111 sends a timing signal to the main control unit 14 when the timing time reaches the preset first holding time. In this case, the control circuit enters the activated state, and the main control unit 14 is allowed to respond to the motor starting signal. Since the timing time reaches the preset first holding time, the switch control unit 111 controls the timing unit 16 to start timing again. When the timing time of the timing unit 16 reaches the first preset time, the timing unit 16 sends a signal to the main control unit 14, and the main control unit 14 no longer responds to the motor starting signal after receiving the timing signal.

When the push handle component 20 is in the non-working position area, the operator first triggers the power-on switch 11. At the moment of detecting that the power-on switch 11 is triggered, the switch control unit 111 controls the timing unit 16 to start timing. The switch control unit 111 sends a timing signal to the main control unit 14 when the timing time reaches the preset second holding time. In this case, the control circuit enters the activated state, and the main control unit 14 is allowed to respond to the motor starting signal. Since the timing time reaches the preset second holding time, the switch control unit 111 controls the timing unit 16 to start timing again. When the timing time of the timing unit 16 reaches the second preset time, the timing unit 16 sends a signal to the main control unit 14, and the main control unit 14 no longer responds to the motor starting signal after receiving the timing signal. Alternatively, since the timing time reaches the preset second holding time, the switch control unit 111 controls the timing unit 16 to start timing again. When the timing time reaches a preset fixed time point, the timing unit 16 sends a signal to the main control unit 14, and the main control unit 14 is allowed to respond to the motor starting signal at the fixed time point.

Preferably, the second holding time is greater than or equal to three times the first holding time. The second preset time is less than the first preset time. Specifically, the second holding time is greater than or equal to 2s, and the first holding time is less than or equal to 0.6s. The second preset time is greater than or equal to 0s and less than or equal to 5s, and the first preset time is greater than or equal to 30s. For example, the first holding time is 0s, 0.1s, 0.3s, 0.5s, or 0.6s in some embodiments. The second holding time is 2 s, 5s, 10s, 15s, 20s, or 30s in some embodiments. The first preset time is 30s, 40s, 50s, or 60s in some embodiments. The second preset time is 0s, 0.2 s, 0.3s, 0.5s, 1s, 2s, 3s, 4s, or 5s. in some embodiments
Preferably, the preset fixed time point is the 0.5th second, the 1st second, the 5th second, the 10th second, the 20th second, or the like since the second holding time is reached in some embodiments.

That is, from the perspective of operations by the user, when the push handle component 20 is in the working position area, the motor can be controlled to start as long as the motor starting switch is triggered within 60s after the user triggers the power-on switch for 0.3s. When the push handle component 20 is in the working position area, the control circuit can be activated only after the user continuously presses or rotates the power-on switch for 30s, and then the motor 13 can be started to work only after the first operating element 62 is triggered within 0.3s since the control circuit is activated, or only after the first operating element 62 is triggered at the 3rd second since the control circuit enters the activated state. For the user, it is a small probability event that the power-on switch 11 is triggered continuously and is not released for a period of time, and a probability that the first operating element 62 is triggered again within an extremely short time after the power-on switch 11 is continuously triggered for the preset trigger holding time is lower. Therefore, this example can effectively reduce a probability that the motor 13 is started because the user accidentally triggers the power-on switch 11 and the first operating element 62, thereby improving operation safety when the push handle component 20 is folded.

Compared with the solutions provided by the first example and the second example, in this example, when the push rod is in the non-working position area, changing the trigger holding time of the power-on switch 11 and changing the allowed trigger time of the first operating element 62 can further increase difficulty in starting the motor 13, reduce a probability that the user accidentally starts the motor 13 in a process of folding the push handle component 20, and improve safety performance.

In some embodiments, the electric tool 100 includes a hand push lawn mower. The motor of the hand push lawn mower includes a cutting motor, the working portion includes a cutting portion, and the cutting motor is configured to drive the cutting portion to move, to perform cutting work. As shown in FIG. 4, for the cutting motor, the first operating element 62 is a cutting pull rod 621 in some embodiments. The cutting pull rod is parallel to the push rod 21 of the push handle component 20, and is provided for the user to pull. When needing to control the cutting motor to start, the user can first trigger the power-on switch 11 disposed on the switch control unit 111, and continuously trigger the power-on switch for the preset trigger holding time, so that the control circuit enters the activated state. When the control circuit enters the activated state, the display unit 17 lights up, to remind the user that the cutting pull rod can be operated. When the cutting pull rod is pulled to be close to the push rod 21 within the allowed trigger time, the cutting motor is started, to drive the cutting portion to work.

Alternatively, the motor 13 of the electric tool includes a self-driving motor, the working portion 31 includes a moving assembly, and the moving assembly is configured to drive the main unit 10 to move in a set path or working area. As shown in FIG. 4, for the self-driving motor, the first operating element 62 is a self-driving pull rod 622 in some embodiments. The self-driving pull rod 622 is disposed at the push rod 21, and is parallel to the push rod 21 and the cutting pull rod 621. The self-driving pull rod 622 and the cutting pull rod 621 are respectively located on two sides of the push rod 21 in some embodiments, to facilitate operations by the user. When needing to control the self-driving motor to start, the user can first trigger the power-on switch 11 disposed on the switch control unit 111, and continuously trigger the power-on switch for the preset trigger holding time, so that the control circuit enters the activated state. When the control circuit enters the activated state, the display unit 17 lights up, to remind the user that the self-driving pull rod 622 can be operated. When the self-driving pull rod is pulled to be close to the push rod 21 within the allowed trigger time, the self-driving motor is started, to drive the moving assembly to work.

All limitations in the first control logic and the second control logic described in the first example, the second example, and the third example on the trigger holding time of the power-on switch 11 and the allowed trigger time of the first operating element 62 are applicable to the cutting motor or the self-driving motor provided in this embodiment. For a specific implementation, refer to the foregoing embodiments. Details are not described herein again.

In the foregoing embodiments, when the cutting motor or the self-driving motor needs to be started, the motor can be started as long as the user performs two switch trigger actions (triggering the power-on switch and triggering the first operating element). When the electric tool is a hand push lawn mower, specifically, when the lawn mower is applied to a commercial scenario, for example, a garden team carries the lawn mower to mow a plurality of gardens, because the garden team needs to transfer from a garden to another garden to work, and the lawn mower needs to be loaded and transported to transfer with the garden team, there are many transportation working conditions, and there are also many retraction working conditions of the push handle component 20. Therefore, there is a large probability of accidentally starting the motor, and it is difficult for a double-trigger action of starting the motor to satisfy a safety requirement for starting the motor in a commercial working condition.

Based on this, in some embodiments, as shown in FIG. 4, the motor starting switch 15 further includes an unlocking element 61. The unlocking element 61 is configured to control the first operating element 62 to switch between a locked state and an unlocked state. When the first operating element 62 is in the locked state, the first operating element 62 cannot output a motor starting signal in response to an operation by the user. When the first operating element 62 is in the unlocked state, the first operating element 62 can output a first operation motor starting signal in response to an operation by the user.

Specifically, in an example, the unlocking element 61 is configured as a mechanical operating member. The mechanical operating member includes a stop member that is operatably coupled to the first operating element 62. When the unlocking element 61 is not operated, the stop member butts against the first operating element 62, so that the first operating element 62 cannot be operated to move toward the push rod 21, and therefore cannot output a motor starting signal. In this case, the first operating element 62 is in the locked state. When the unlocking element 61 is operated, the stop member releases the first operating element 62, so that the first operating element 62 can be operated to move toward the push rod 21. In this case, the first operating element 62 is in the unlocked state. When the first operating element 62 approaches the push rod 21, the first operating element 62 can output a motor starting signal. Therefore, in this example, when the motor needs to be started, the user needs to perform three trigger actions, that is, the power-on switch 11 is triggered first, so that the control circuit enters the activated state; and then, the unlocking element 61 and the first operating element 62 are separately triggered within the allowed trigger time, to start the motor.

All limitations in the first control logic and the second control logic provided in the first example, the second example, and the third example on the trigger holding time of the power-on switch 11 and the allowed trigger time of the first operating element 62 are applicable to this embodiment. That is, under the first control logic, after the control circuit enters the activated state, the user needs to operate the unlocking element 61 and the first operating element 62 in the first preset time, to control the motor to start. Under the second control logic, after the control circuit enters the activated state, the user needs to operate the unlocking element 61 and the first operating element 62 in the second preset time, to control the motor to start. Because the second preset time is less than the first preset time and the second preset time is less than or equal to 5s, it is very difficult for the user to operate two elements in a short time under the second control logic, thereby increasing difficulty in starting the electric tool under the second control logic.

In another example, the unlocking element 61 is configured as an electronic switch, and the electronic switch can output an unlocking signal in response to an operation by the user. The control circuit is allowed to receive the motor starting signal only after receiving the unlocking signal. That is, in this example, when needing to control the motor to start, the user needs to trigger the power-on switch 11 first, so that the control circuit enters the activated state. Then, the unlocking element 61 is triggered. Only after the control circuit receives the unlocking signal, and then the user triggers the first operating element 62, the motor can be controlled to start.

All limitations in the first control logic and the second control logic provided in the first example, the second example, and the third example on the trigger holding time of the power-on switch 11 and the allowed trigger time of the first operating element 62 are applicable to this embodiment. For details, refer to the description in which the unlocking element 61 is a mechanical operating member in the previous embodiment. Details are not described herein again.

In a case in which the unlocking element 61 is an electronic switch, continuous trigger times of the unlocking element 61 are further limited differently under the first control logic and the second control logic in some embodiments, to further increase difficulty in starting the motor under the second control logic.

In a fourth example, the first control logic includes at least: the control circuit enters the activated state, a continuous trigger time in which the unlocking element 61 is triggered until the unlocking signal is outputted to the control circuit reaches a third holding time, and the control circuit is allowed to receive the motor starting signal, to control the current of the power supply to flow to the motor according to the motor starting signal, to cause the motor to drive the working portion to work. That is, when the timing time does not reach the third holding time, the control circuit does not respond to the motor starting signal, that is, cannot receive the motor starting signal, or does not control the motor to start even if the motor starting signal is received.

The second control logic includes at least: the control circuit enters the activated state, a continuous trigger time in which the unlocking element 61 is triggered until the unlocking signal is outputted to the control circuit reaches a fourth holding time, and the control circuit is allowed to receive the motor starting signal, to control the current of the power supply to flow to the motor according to the motor starting signal, to cause the motor to drive the working portion to work. The fourth holding time is greater than the third holding time, and the fourth holding time is greater than or equal to three times the third holding time.

Specifically, as shown in FIG. 4, the unlocking element 61 is disposed on the switch control unit 111 in some embodiments. The unlocking element 61 is a button switch in some embodiments. When the button switch is pressed, an unlocking signal is outputted to the main control unit 14 in some embodiments. The main control unit 14 receives the unlocking signal, and is allowed to respond to the motor starting signal, to control the motor to start. The main control unit 14 has not received the unlocking signal, and is prohibited from responding to the motor starting signal. In this case, even if the user operates the first operating element 61, the motor still cannot be started.

When the push handle component 20 is in the working position area, the user needs to first trigger the power-on switch 11, so that the control circuit enters the activated state. Then, the unlocking element 61 is triggered, and the unlocking element 61 is pressed continuously. At the moment of detecting that the unlocking element 61 is triggered, the switch control unit 111 controls the timing unit 16 to start timing, and continue timing in a period in which the unlocking element 61 keeps the triggered state, until a timing time reaches a preset third holding time. The switch control unit 111 sends an unlocking signal to the main control unit 14, so that the main control unit 14 is allowed to receive a motor starting signal. When receiving the motor starting signal, the main control unit 14 controls the motor to start.

When the push handle component 20 is in the non-working position area, if the motor needs to be controlled to start, the power-on switch 11 needs to be first triggered, so that the control circuit enters the activated state. Then, the unlocking element 61 is triggered, and the unlocking element 61 is pressed continuously. At the moment of detecting that the unlocking element 61 is triggered, the switch control unit 111 controls the timing unit 16 to start timing, and continue timing in a period in which the unlocking element 61 keeps the triggered state, until a timing time reaches a preset fourth holding time. The switch control unit 111 sends an unlocking signal to the main control unit 14, so that the main control unit 14 is allowed to receive a motor starting signal. When receiving the motor starting signal, the main control unit 14 can control the motor to start.

Preferably, the fourth holding time is greater than or equal to three times the third holding time. For example, the fourth holding time is three times, five times, 20 times, 50 times, or 100 times the third holding time in some embodiments. A larger fourth holding time indicates a longer time in which the unlocking element 61 needs to be continuously triggered, and a lower probability of accidental triggering by the user.

Specifically, the fourth holding time is greater than or equal to 2s, and the third holding time is less than or equal to 0.6s. For example, the third holding time is 0s, 0.1s, 0.3s, 0.5s, or 0.6s in some embodiments, and the fourth holding time is 2 s, 5s, 10s, 15s, 20s, or 30s in some embodiments. Because the fourth holding time is much greater than the third holding time, the user needs to continuously trigger the unlocking element 61 for a period of time when the push handle component 20 is in the non-working position area. Usually, the user can start the motor by pressing three switches briefly. Therefore, the user does not conceive that after pressing the power-on switch 11, the user needs to continuously press the unlocking element 61. Even if the user triggers a switch accidentally, the switch is not triggered accidentally for a long time. Therefore, the solution provided by this embodiment can reduce a probability that the motor is started because the user triggers the power-on switch and the motor starting switch accidentally, and improve use safety when the push handle component 20 is folded.

Alternatively, in a fifth example, when the push handle component 20 is in the non-working position area, a trigger holding time of the unlocking element 61 is not limited in some embodiments, but an allowed trigger time of the unlocking element 61 is limited, to increase difficulty in starting the motor. In this embodiment, the first control logic is the same as the foregoing fourth example in some embodiments, and the second control logic includes at least: an interval of a preset fixed time point exists between when the control circuit enters the activated state and when the control circuit receives the unlocking signal. That is, a timing start point at which the control circuit is allowed to receive the unlocking signal is the moment when the control circuit enters the activated state. When the timing time reaches a preset fixed time point, the control circuit is allowed to receive the unlocking signal at the fixed time point, and is allowed to receive a motor starting signal after receiving the unlocking signal.

For example, the preset fixed time point is 5s, 10s, 15s, or 20s in some embodiments, and the preset fixed time point at an interval from when the control circuit enters the activated state is 5s, 10s, 15s, or 20s at an interval from when the control circuit enters the activated state. That is, the control circuit is allowed to receive the unlocking signal at the 5th second, the 10th second, the 15th second, or the 20th second from the moment of entering the activated state. When the timing time does not reach the preset interval time or exceeds the preset interval time, the control circuit does not respond to the unlocking signal, that is, cannot receive the unlocking signal, or performs no action even if the unlocking signal is received.

An allowed trigger time of the unlocking element 61 and an allowed trigger time of the first operating element 62 under the first control logic are not limited in this embodiment. The user can control the motor to start as long as the user triggers the unlocking element 61 and the first operating element 62 sequentially after triggering the main power-on switch 11. Under the second control logic, through a limitation that the unlocking signal is allowed to be received at a fixed moment, difficulty in starting the motor is increased in some embodiments, thereby improving safety of the electric tool when the push handle component 20 is in the retracted state.

Further, in a sixth example, based on the fourth example or the fifth example, under the first control logic and the second control logic, not only a trigger holding time or an allowed trigger time of the unlocking element 61 is limited in some embodiments, but also an allowed trigger time of the first operating element 62 is further limited in some embodiments, to further increase difficulty in starting the motor under the second control logic.

Specifically, the first control logic further includes: the control circuit is allowed to receive the motor starting signal within a first preset time. A timing start point of the first preset time is the moment when the continuous trigger time of the unlocking element 61 reaches the third holding time.

The second control logic further includes: the control circuit is allowed to receive the motor starting signal in a second preset time, where a timing start point of the second preset time is the moment when the continuous trigger time of the unlocking element 61 reaches the fourth holding time, and the second preset time is less than the first preset time.

Alternatively, the second control logic includes: the control circuit is allowed to receive the motor starting signal at a fixed time point at an interval of a preset time since the unlocking signal is received.

For example, the second preset time is less than or equal to one fifth, one tenth, or one percent of the first preset time. For example, the second preset time can be one fifth or one tenth of the first preset time in some embodiments.

Specifically, the first preset time is greater than or equal to 30s, and the second preset time is greater than or equal to 0s and less than or equal to 5s. For example, the first preset time is 30s, 40s, 50s, or 60s in some embodiments. The second preset time is 0s, 0.1s, 0.2 s, 0.3s, 0.4s, or 0.5s in some embodiments. If the second preset time is greater than 5s, a probability that the user triggers the first operating element accidentally is improved. The preset fixed time point is the 0.5th second, the 5th second, the 10th second, the 15th second, the 20th second, or the like since the timing time reaches the fourth holding time in some embodiments.

In this embodiment, under the second control logic, not only the trigger holding time of the unlocking element 61 can be prolonged, but also the allowed trigger time of the first operating element 62 can be shortened. That is, when the push handle component 20 is in the non-working position area, the motor can be controlled to start only after the user first triggers the main power-on switch 11, then continuously triggers the unlocking element 61 for a particular time, and triggers the first operating element 62 at a moment when the continuous trigger time is reached or at a fixed time point after the continuous trigger time is reached. Compared with the previous embodiment, the motor starting logic provided by this embodiment has a lower probability of accidentally starting the motor, which can further improve safety of the electric tool.

Further, in some embodiments, different trigger holding time of the power-on switch **11** under the first control logic and the second control logic can be further set, to further increase a probability that the motor is accidentally started under the second control logic. That is, the sixth example and the first example are combined.

Under the first control logic, the trigger holding time of the power-on switch **11** reaches the first holding time, and the control circuit is allowed to receive an unlocking signal. When receiving the unlocking signal, the control circuit determines whether the time in which the unlocking element 61 keeps the triggered state reaches the third holding time. When the third holding time is reached, the control circuit is allowed to receive a motor starting signal within the first preset time, and when receiving the motor starting signal, the control circuit controls the motor to start. The first holding time, the third holding time, and the first preset time are the same as those in the foregoing embodiments, and details are not described herein again.

Under the second control logic, the trigger holding time of the power-on switch 11 reaches the second holding time, and the control circuit is allowed to receive an unlocking signal. When receiving the unlocking signal, the control circuit determines whether the time in which the unlocking element 61 keeps the triggered state reaches the fourth holding time. When the fourth holding time is reached, the control circuit is allowed to receive a motor starting signal within the second preset time or at a fixed time point at an interval of a preset time since the fourth holding time is reached, and controls the motor to start when the motor starting signal is received. The second holding time is greater than the first holding time, the fourth holding time is greater than the third holding time, and the second preset time is less than the first preset time. The second holding time, the fourth holding time, and the second preset time are the same as those in the foregoing embodiments, and details are not described herein again.

In this embodiment, through a limitation that each of the trigger holding time of the power-on switch 11, the continuous trigger time of the unlocking element 61, and the allowed trigger time of the first operating element 62 under the first control logic is different from that under the second control logic, the probability that the user accidentally operates the switch assembly to start the motor when the push handle component 20 is in the non-working position area is greatly reduced. Usually, the user can start the motor by pressing three switches briefly. Therefore, the user does not conceive that the power-on switch 11 and the unlocking element 61 need to be triggered for a long time. Moreover, it is a small probability event that three switches are successively accidentally triggered, a probability that the triggered state is kept and is not released for a particular time when a first trigger action (the power-on switch 11) and a second trigger action (the unlocking element 61) are performed is smaller, and a probability of triggering the first operating element within a short time or at a fixed time point after the second trigger action ends is smaller, which almost cannot be implemented unconsciously. Therefore, the solution provided in this embodiment can increase difficulty in triggering the switch assembly accidentally when the push handle component 20 is in the retracted state, thereby effectively reducing a probability of accidentally starting the motor.

Each electric tool provided in the foregoing embodiments includes a power-on switch 11. The power-on switch 11 is triggered to cause the control circuit to enter the activated state. When the control circuit enters the activated state, the control circuit is allowed to receive a motor starting signal.

In another implementation, alternatively, the electric tool is not provided with the power-on switch 11 in some embodiments, and the control circuit can enter the activated state when the electric tool is connected to the power supply 12.

Specifically, when the battery pack is mounted to the power supply mounting portion, the control circuit enters the activated state in response to connection of the battery pack. In this case, the power supply circuit from the power supply 12 to the main control unit 14 is turned on, and the main control unit 14 is powered on, and is allowed to receive a motor starting signal. To improve safety of the electric tool and reduce a probability of accidentally starting the motor, the motor starting switch includes an unlocking element 61 and a first operating element 62, the unlocking element 61 is configured to output an unlocking signal in response to an operation by the user, and the first operating element 62 is configured to output a motor starting signal in response to an operation by the user. When receiving the unlocking signal and the motor starting signal, the main control unit 14 controls the motor to start.

When the electric tool is not provided with the power-on switch 11, the difficulty in starting the motor when the push handle component 20 is in the non-working position area is increased by using the following control logics in some embodiments.

In a seventh example, the first control logic includes: the control circuit enters the activated state, a continuous trigger time in which the unlocking element 61 is triggered until the unlocking signal is outputted to the control circuit reaches a third holding time, and the control circuit is allowed to receive the motor starting signal, and control the current of the power supply to flow to the motor according to the received motor starting signal, to cause the motor to drive the working portion to work.

The second control logic includes: the control circuit enters the activated state, a continuous trigger time in which the unlocking element 61 is triggered until the unlocking signal is outputted to the control circuit reaches a fourth holding time, and the control circuit is allowed to receive the motor starting signal, and control the current of the power supply to flow to the motor according to the received motor starting signal, to cause the motor to drive the working portion to work. The fourth holding time is greater than the third holding time, and the fourth holding time is greater than or equal to three times the third holding time. For specific limitations of the third holding time and the fourth holding time, refer to the previous embodiment. Details are not described in this embodiment again.

Certainly, an allowed trigger time of the first operating element 62 is also be further limited in some embodiments, to further increase difficulty in starting the motor under the second control logic.

In an eighth example, based on the seventh example, the first control logic further includes: the control circuit is allowed to receive the motor starting signal within a first preset time. A timing start point of the first preset time is the moment when the trigger holding time of the unlocking element 61 reaches the third holding time.
the second control logic further includes: the control circuit is allowed to receive the motor starting signal in a second preset time. A timing start point of the second preset time is the moment when the trigger holding time of the unlocking element 61 reaches the fourth holding time, and the second preset time is less than the first preset time.

Alternatively, the second control logic includes: the control circuit is allowed to receive the motor starting signal at a fixed time point at an interval of a preset time since the fourth holding time is reached.

For specific limitations of the first control logic and the second control logic, refer to the foregoing embodiments. Details are not described herein again.

In the foregoing embodiments, the electric tool is a hand push lawn mower. The hand push lawn mower includes both a cutting motor and a self-driving motor in some embodiments. The first control logic and the second control logic provided in the foregoing embodiments are applicable to control of starting of the cutting motor or control of starting of the self-driving motor.

In an embodiment, each of the power-on switch 11 and the unlocking element 61 is a button switch in some embodiments. The button switch is a normally open switch or a normally closed switch in some embodiments. For a normally open switch, the switch is closed when being triggered, and is open when being released. Alternatively, for a normally closed switch, the switch is opened when being triggered, and the switch is closed when being released. Therefore, the control circuit generates a level jump in response to a trigger action of the switch. When the switch is continuously triggered, the level remains unchanged, and when the switch is released, a level jump occurs again. Further, the main control unit 14 can start timing at a start moment of the level jump, and keep timing when the level is unchanged, and therefore can determine whether the time in which the switch keeps the triggered state reaches the preset holding time.

In the motor starting control solution provided in the foregoing embodiments, when the push handle component 20 is in the non-working position area, the second control logic is used. Although it is very difficult for the user to operate the switch assembly to start the motor under the second control logic, there is also a specific probability of starting. If the motor is accidentally started, there is still a safety risk.

Based on this, in an embodiment, the control circuit allows, when receiving the first state signal, the motor to start working at least at a first rotational speed, and the control circuit allows, when receiving the second state signal, the motor to start working at least at a second rotational speed, where the second rotational speed is less than or equal to one third of the first rotational speed. Particularly, the first rotational speed herein should be understood as a rotational speed of the motor in normal working of the electric tool.

Preferably, the second rotational speed is less than or equal to one fifth of the first rotational speed. For example, the second rotational speed is one third, one fourth, one fifth, or one tenth of the first rotational speed in some embodiments.

Specifically, the first rotational speed is greater than or equal to 2500 r/min, for example, 2500 r/min, 3000 r/min, 3500 r/min, or 4000 r/min in some embodiments. The second rotational speed is less than or equal to 700 r/min, for example, 700 r/min, 600 r/min, 300 r/min, or 200 r/min in some embodiments. Because the second rotational speed is far less than the first rotational speed, even if the motor drives the working portion (such as the blade and the moving assembly) to work, the user is not badly injured.

In an embodiment, when the control circuit receives the second state signal, the control circuit is further configured to control the motor 13 to be turned off after the motor 13 is started for a preset time. Therefore, even if an accidental operation by the user in a process of folding the push rod causes the motor 13 to start, the control circuit can still control the motor 13 to be turned off after starting for a preset time, thereby preventing damage to the user.

In this embodiment, the preset time is less than or equal to 5s. Specifically, the preset time is 2s, 4s, or 5s in some embodiments. When the preset time exceeds 5s, the number of revolutions of the motor is excessively high, causing a potential safety risk.

The following describes a linked structure between the adjustment component 50 and the push handle component 20 provided in this application.

As described above, the electric tool provided in this application has the adjustment component 50. The adjustment component includes the engagement member 51 and the adjustment member 52. The engagement member 51 is engaged with the adjustment member 52 to adjust a position between the push handle component 20 and the main unit 10. There are a plurality of implementations of the adjustment component. Two implementations are used as examples for description below.

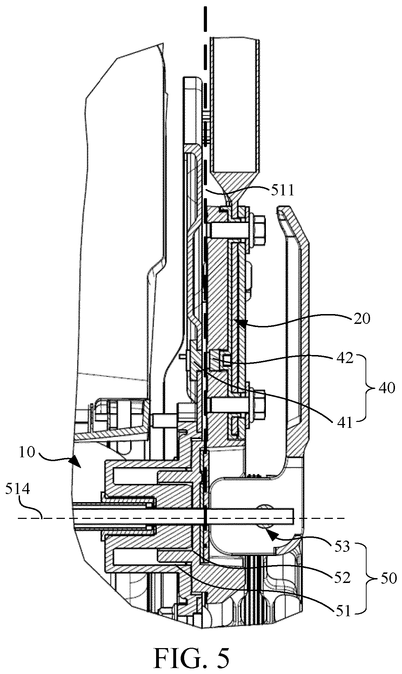

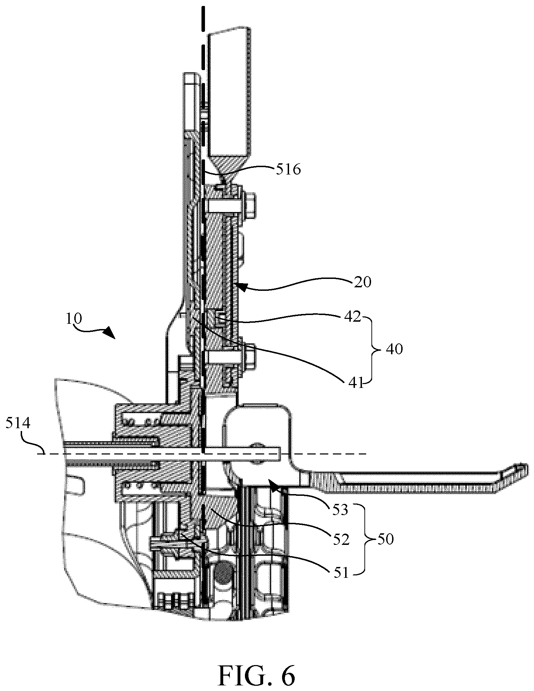

In an example, referring to FIG. 5 and FIG. 6, the adjustment component 50 includes an engagement member 51 and an adjustment member 52. The engagement member 51 is connected to the main unit 10, and the adjustment member 52 is connected to the push handle component 20. When the engagement member 51 is engaged with the adjustment member 52, the push handle component 20 is locked to the main unit 10 in some embodiments. When the engagement member 51 is disengaged from the adjustment member 52, the push handle component 20 can rotate around the main unit 10.

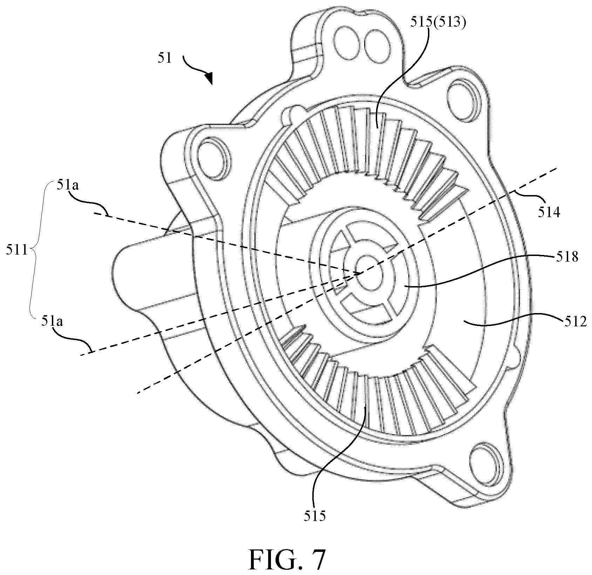

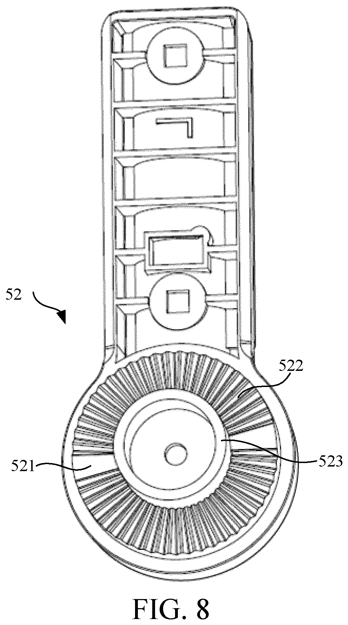

Specifically, with reference to FIG. 7 and FIG. 8, a first position 511 is provided on the engagement member 51, and an engagement portion 521 is disposed on the adjustment member 52. When the engagement portion 521 is engaged in the first position 511, the push handle component 20 is in a working position area. When the engagement portion 521 leaves the first position, the push handle component 20 is in a non-working position area.

The adjustment component 50 further includes an operating assembly 53 that drives the adjustment member 52 to be engaged with or to be disengaged from the engagement member 51. The operating assembly 53 can move to an unlocking area 516 along a direction of an axis 514 of the engagement member 51. When the adjustment member 52 is engaged with the engagement member 51, the push handle component 20 is locked in the first position 511 and cannot be adjusted. When the operating assembly 53 moves to the unlocking area 516 along the axis 514, the adjustment member 52 is disengaged from the engagement member 51. In this case, the adjustment member 52 is in an active state relative to the engagement member 51, and the push handle component 20 can be correspondingly adjusted, for example, rotated. The unlocking area 516 is a plane area having a particular spacing with the surface of the engagement member 51 in the direction of the axis 514, and certainly, can also be understood in some embodiments as a plane area roughly parallel to the surface of the engagement member 51. Because the unlocking area 516 is a plane area, the adjustment member 52 can move from the first position 511 to the unlocking area 516 along the direction of the axis 514; or can move from another position on the engagement member 51 to the unlocking area 516 along the direction of the axis 514. In addition, the spacing between the unlocking area 516 and the surface of the engagement member 51 is determined according to performance of the signal unit 40 in some embodiments. For example, the spacing between the unlocking area 516 and the engagement member base 51 along the direction of the axis 514 is 4 mm. When the user needs to rotate the push handle component 20 from the working position area (the first position) to the non-working position area, the user needs to first pull the operating assembly 53, to translate the push handle component 20 from the first position 511 to the unlocking area 516, and then rotate the push handle component 20 to the non-working position area.

Specifically, referring to FIG. 5 to FIG. 8, there are two implementations in which the engagement portion 521 is engaged in the first position 511: The first implementation is the engagement portion 521 is directly engaged in the first position 511, that is, the first position 511 has a structure connected to the engagement portion 521. The second implementation is when the engagement portion 521 is in the first position 511, another position on the adjustment member 52 is engaged with another position on a base 51. For example, the first position 511 is designed as a blank area or a groove structure, and several teeth are disposed around the blank area or the groove structure; and corresponding teeth are disposed around of the engagement portion 521 for meshing. Provided that the push handle component 20 cannot be adjusted after the adjustment member 52 is engaged with the engagement member 51, the first implementation and the second implementation are both feasible.

When the engagement portion 521 is engaged in the first position 511 in the second manner, using an example in which several teeth are disposed around the first position 511, the teeth and the first position 511 are separately distributed on the engagement member 51 in a plurality of manners. For example, the teeth and the first position 511 are distributed around the axis 514; or several teeth are disposed at intervals around the axis 514 to form a ring-like structure, and the first position 511 is in the ring-like structure.

Referring to FIG. 7 and FIG. 8, FIG. 7 shows a structure of the engagement member 51, and FIG. 8 shows a structure of the adjustment member 52. To ensure that the adjustment member 52 moves stably along the direction of the axis 514 after being disengaged, a guide shaft 518 having the axis 514 is disposed on the engagement member 51. A sliding socket 523 that is slidably sleeved outside the guide shaft 518 is disposed on the adjustment member 52.

In some embodiments, referring to FIG. 7 and FIG. 8, the first position 511 includes at least two range areas 51a. All the range areas 51a are distributed around the axis 514. When the engagement portion 521 is engaged in any one of the range areas 51a, the push handle component 20 is in the working position area, and the signal unit 40 feeds back the first state signal to the main control unit 14. It should be noted that adjustment between range areas 51a is as follows in some embodiments: First, the operating assembly 53 is used to disengage the engagement portion 521 from a range area 51a and move the engagement portion onto the unlocking area 516 along the direction of the axis 514. In this case, the adjustment member 52 is in an active state; the adjustment member 52 is rotated to align the engagement portion 521 with another range area 51a; and then, the operating assembly 53 is used to drive the engagement portion 521 to be engaged on the range area 51a, to complete adjustment between the range areas 51a.

In some embodiments, referring to FIG. 7 and FIG. 8, the engagement member 51 further has a second position 512 that is spaced apart from the first position 511 about the axis 514. When the engagement portion 521 is engaged in the second position 512, the push handle component 20 is located in the non-working position area. In this case, the push handle component 20 is in a fully retracted state.

Further, referring to FIG. 7 and FIG. 8, a butting portion 513 is disposed on the engagement member 51. The butting portion 513 is located between the first position 511 and the second position 512. When the engagement portion 521 butts against the butting portion 513 along the direction of the axis 514, the adjustment member 52 is disengaged from the engagement member 51.

It should be noted that when butting against the engagement portion 521, the butting portion 513 can prevent the adjustment member 52 from being engaged with the engagement member 51 in a plurality of implementations. For example, the butting portion 513 is designed to be higher than the first position 511 in the direction of the axis 514, so that when the engagement portion 521 butts against the butting portion 513, none of other parts of the adjustment member 52 can be in contact with the base 51; or the butting portion 513 is designed as a tooth-like structure, and the engagement portion 521 is designed as a protrusion structure having no teeth.

In some embodiments, referring to FIG. 2, FIG. 7, and FIG. 8, the engagement member 51 further has a third position 517 that is spaced apart from the first position 511 about the axis 514. When the engagement portion 521 is engaged in the third position 517, the push handle component 20 is located in the non-working position area. In this case, the push handle component 20 is an intermediate retracted state, and is approximately perpendicular to a plane on which the electric tool 100 is located. In this way, when the push handle component 20 is approximately perpendicular to the plane on which the electric tool 100 is located, that is, the push handle component 20 is substantially in a vertical state, the control unit receives the second state signal and enables the second control logic.

It should be noted that when the electric tool 100 is being transferred or transported, if the push handle component 20 is in the fully retracted state, for example, the push handle component 20 is folded on the main unit 10 and is approximately parallel to the plane on which the electric tool 100 is located, an overall length of the electric tool 100 is increased, and transportation space is occupied. If the push handle component 20 is set in the intermediate retracted state, and is approximately perpendicular to the plane on which the electric tool 100 is located. For example, an angle between the push handle component 20 and the plane on which the electric tool 100 is ranges from 70° to 110°, an overall length of the electric tool 100 can be reduced, to facilitate transfer or transportation, and improve transfer efficiency.

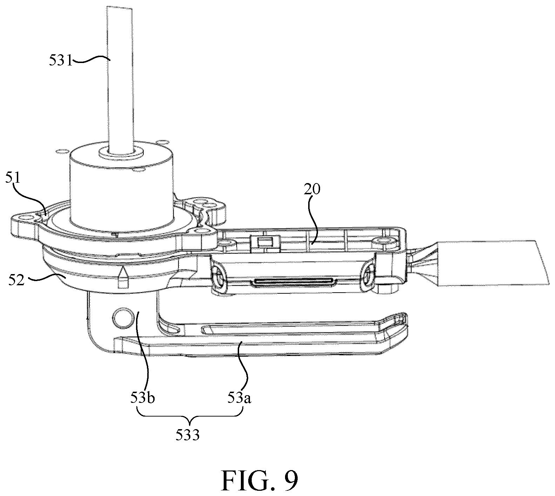

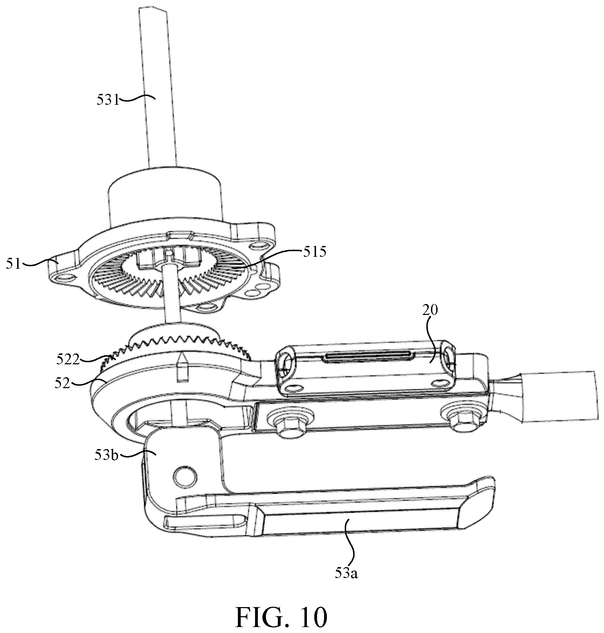

In some embodiments, referring to FIG. 9 and FIG. 10, the operating assembly 53 includes a guide member 531 connected to the engagement member 51 at the axis 514, an operating member 533 for driving the guide member 531 to move along the direction of the axis 514, and an elastic member 534. The adjustment member 52 is sleeved on the guide member 531 and is located between the engagement member 51 and the operating member 533. When the operating member 533 is switched to the locked state, the adjustment member 52 can be driven to be engaged with the base 51. When the operating member 533 is switched to the unlocked state, the elastic member 534 drives the adjustment member 52 to be disengaged from the engagement member 51 and move to the unlocking area 516.

It can be known that when the operating member 533 is switched to the locked state, the adjustment member 52 is driven to compress the adjustment member 52 along the direction of the axis 514, so that the adjustment member is engaged with the engagement member 51; and when the operating member 533 is switched to the unlocked state, the adjustment member 52 loses the driving force of the operating member 533, moves to the unlocking area 516 in a direction opposite to the direction of the axis 514 under the elastic force of the elastic member 534, and is disengaged from the engagement member 51.

Optionally, the elastic member 534 is a spring, an elastic rubber, an elastic metal sheet, or the like in some embodiments.

Further, referring to FIG. 9 and FIG. 10, the operating member 533 includes a cam portion 53b that is rotatably connected to the guide member 531 and a rotation portion 53a that is connected to the cam portion 53b. A peripheral side surface of the cam portion 53b is in contact with the adjustment member 52. It can be known that when the operating member 533 is switched to the locked state, the cam portion 53b is rotated by using the rotation portion 53a, so that the most projecting point on the peripheral side surface of the cam portion 53b butts against the adjustment member 52, and the adjustment member 52 is driven to move toward and be engaged with the engagement member 51; and when the operating member 533 is switched to the unlocked state, the cam portion 53b is rotated by using the rotation portion 53a, so that the most projecting point on the peripheral side surface of the cam portion 53b is rotated away from the adjustment member 52, and the adjustment member 52 is disengaged from the engagement member 51 under the action of the elastic member 534.

In some embodiments, referring to FIG. 10, a first engagement portion 515 that is distributed at intervals around the axis 514 is disposed on a side surface of the engagement member 51 that faces the adjustment member 52, and a second engagement portion 522 that is meshed with the first engagement portion 515 is disposed on the adjustment member 52. The first engagement portion 515 and the second engagement portion 522 are designed as a plurality of structures in some embodiments. For example, the first engagement portion 515 is designed as a groove-shaped structure, and the second engagement portion 522 is designed as a convex structure that matches the groove-shaped structure. Specifically, in some embodiments, each of the first engagement portion 515 and the second engagement portion 522 is a tooth-like structure.

In this example, the adjustment component 50 is a millstone structure. When the push handle component 20 needs to be adjusted, the operating member 533 is first switched to the unlocked state, so that the adjustment member 52 is disengaged from the engagement member 51, and then the push handle component 20 is rotated. It is understood in some embodiments that a structure of the adjustment component 50 is not limited thereto, and another component can also be used in some embodiments.

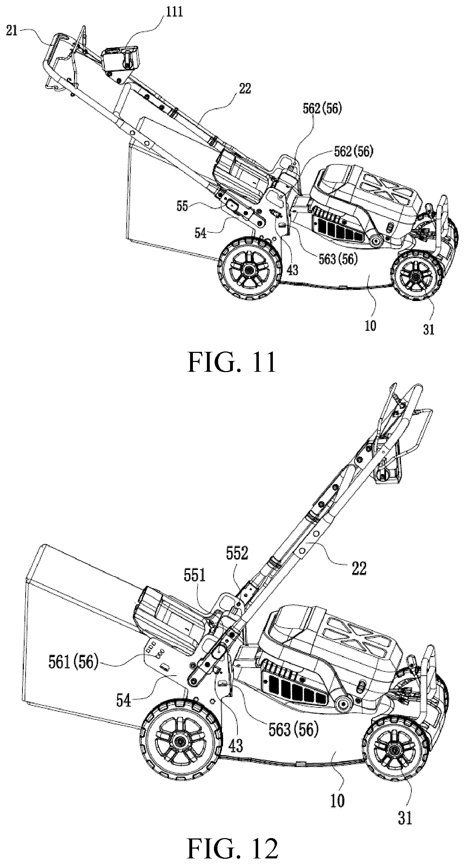

In another example, for a structure of the adjustment component 50, refer to FIG. 11 to FIG. 13. The adjustment component 50 includes an engagement member 54 connected to a main unit 10 and an adjustment member 55 connected to a push handle component 20. The adjustment member 55 is configured to rotate the whole push handle component 20 relative to the main unit 10 or lock the push handle component 20 to the engagement member 54, so that the whole push handle component 20 is fixed relative to the main unit 10.

Further, the adjustment member 55 includes an adjustment handle 551 and a pin shaft 552 connected to the adjustment handle 551. The engagement member 54 is a base connected to the main unit 10. At least one of the push handle component 20 and the engagement member 54 is provided with a positioning portion 56. The adjustment handle 551 is configured to drive the pin shaft 552 to move along a length direction of the pin shaft 552, so that the pin shaft is engaged with the positioning portion 56 or is disengaged from the positioning portion 56. When the pin shaft 552 is engaged with the positioning portion 56, the push handle component 20 is fixed relative to the base 54. When the pin shaft 552 is disengaged from the positioning portion 56, the push handle component 20 is rotatable relative to the base 54, to make it convenient for the user to fold the push handle component 20.

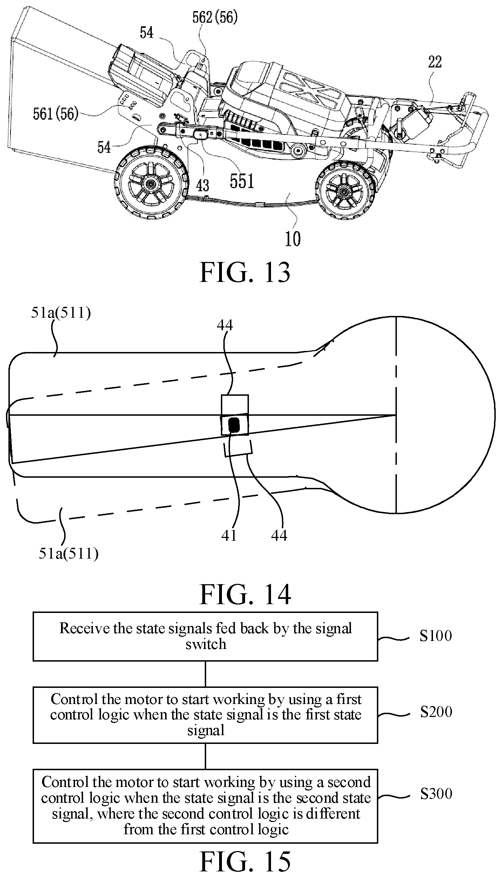

Specifically, the positioning portion 56 is disposed on the base 54 in some embodiments, and the adjustment member 55 is disposed on a push rod 21 on two sides of the main unit 10 in some embodiments. The push rod 21 includes a pin hole passing through the push rod 21, and the pin shaft 552 of the adjustment member 55 matches the pin hole, so that the adjustment member 55 is engaged with the push rod 21. The pin axis 552 partially extends out of the pin hole, to be engaged with the positioning portion 56 on the base 54. When the pin shaft 552 is disengaged from the positioning portion 56 and is entirely retracted into the pin hole, the push rod 21 can rotate around the main unit 10. In this embodiment, the positioning portion 56 is a positioning hole in some embodiments. A plurality of positioning holes are included, and are distributed in the working position area and the non-working position area in some embodiments, to make it convenient to position the push handle component 20 to some positions in the working position area or the non-working position area. As shown in FIG. 11, FIG. 12, and FIG. 13, according to different areas in which the positioning holes are distributed, the positioning holes includes a working area positioning hole 561 and a non-working area positioning hole 562/563 in some embodiments. When the pin shaft 552 is engaged with the working area positioning hole 561, the push rod 21 is fixed in the working position area. When the pin shaft 552 is engaged with the non-working area positioning hole 562/563, the push rod 21 is fixed in the non-working position area. There are a plurality of working area positioning holes 561 in some embodiments. The plurality of working area positioning holes 561 are arranged along a rotation arc of the push rod 21, to position the push rod 21 in a plurality of different ranges, so that the push rod is adaptable to users of different heights. There are also a plurality of non-working area positioning holes 562/563 in some embodiments. In this embodiment, there are two non-working position area positioning holes that are respectively a positioning hole 562 and a positioning hole 563. The positioning hole 562 is used for positioning the push rod in an intermediate retracted state shown in FIG. 12, and the positioning hole 563 is used for positioning the push rod in a fully retracted state shown in FIG. 13. It is understood in some embodiments that, a plurality of positioning holes are further disposed between the positioning hole 562 and the positioning hole 563 along the rotation arc of the push rod 21 in some embodiments, to enable the push rod 21 to be positioned in a plurality of positions in the non-working position area. Certainly, the push handle component 20 is alternatively unfixed in the non-working position area in some embodiments, that is, the positioning holes are disposed only in the working position area.

Certainly, the positioning portion 56 is alternatively disposed on the main unit 10 and the push rod 21 in some embodiments. That is, a pin hole is disposed on the push rod 21, and a plurality of positioning holes are disposed on the base 54. When the push rod 21 is rotated until the pin hole is coaxial with one of the positioning holes on the base 54, the adjustment member 55 is detachably engaged in the positioning hole and the pin hole, to position the push rod 21 to the base 54.

The following describes a configuration form in which the signal unit 40 feeds back different state signals according to positions of the push handle component 20 provided in this application.

In an embodiment, the signal unit 40 is a mechanical trigger switch in some embodiments. As shown in FIG. 11 to FIG. 13, the signal unit 40 is configured as a micro switch 43. The micro switch 43 is triggered or released in response to a change of a position of the push rod 22 when the push rod 22 rotates, to output different state signals. The push rod 22 is connected to the base, and the micro switch 43 is disposed on the base 54, and therefore can sensitively respond to rotation of the push rod 22. The micro switch 43 includes a trigger portion and a switching member. The switching member is controlled by the trigger portion to switch between an off state and an on state. When the micro switch is in the off state or the on state, the signal unit 40 feeds back a first state signal or a second state signal.

Specifically, the switching portion is connected to the main control unit 14. When the trigger portion is triggered, the main control unit 14 can detect a level jump of a circuit caused by a change of an on-off state of the switching portion. When the switching portion is in the on state and the off state, electrical signals fed back by the circuit are different. For example, when the micro switch is a normally open switch, if the trigger portion is triggered, the switching portion switches from the off state to the on state, and the main control unit 14 can detect that a voltage signal jumps from a high level to a low level; and if the trigger portion is released, the switching portion switches from the on state to the off state, and the main control unit 14 can detect that a voltage signal changes from a low level to a high level. Certainly, the micro switch is alternatively a normally closed switch in some embodiments. Therefore, the main control unit 14 can determine, by detecting a level jump of the circuit, whether the trigger portion is currently triggered, and then determine a position of the push rod, thereby executing different motor starting logics.

In some embodiments, the micro switch 43 is a normally open switch, and is disposed in the non-working position area of the rotation area of the push handle component 20. More specifically, the micro switch 43 is disposed on a rotation path of the push handle component 20 in the non-working position area, so that when the push handle component 20 rotates in the non-working position area, the micro switch can be continuously triggered. As shown in FIG. 12 and FIG. 13, when the push handle component 20 is in the intermediate retracted state or the fully retracted state, the micro switch 43 is triggered. Therefore, when the push handle component 20 rotates to the non-working position area, the micro switch 43 is triggered and feeds back a second state signal, and the main control unit 14 receives the second state signal and executes the second control logic. When the push handle component 20 rotates to the working position area, the micro switch 43 is released and feeds back a first state signal, and the main control unit 14 executes the first control logic when receiving the first state signal.

In some embodiments, the micro switch 43 is a normally open switch, and is disposed in the working position area of the rotation area of the push handle component 20. More specifically, the micro switch 43 is disposed on a rotation path of the push handle component 20 in the working position area, so that when the push handle component 20 rotates in the working position area, the micro switch can be continuously triggered. When the push handle component 20 is locked at a plurality of ranges in the working position area, the micro switch 43 is triggered and feeds back a first state signal, and the main control unit 14 receives the first state signal and executes the first control logic. When the push handle component 20 rotates to the non-working position area, the micro switch 43 is released and feeds back a second state signal, and the main control unit 14 executes the second control logic when receiving the second state signal.

In this embodiment, because the signal unit 40 is a micro switch, a position of the micro switch and a normally-open or normally-closed form of the micro switch are set, so that the micro switch is released and the signal unit 40 feeds back the first state signal regardless of whether the push handle component 20 is locked or unlocked relative to the main unit 10 as long as the push handle component 20 is in the working position area; and the micro switch is triggered and the signal unit 40 feeds back the second state signal regardless of whether the push handle component 20 is locked or unlocked relative to the main unit 10 as long as the push handle component 20 is in the non-working position area.

In some embodiments, the signal unit 40 is alternatively an electric sensing unit in some embodiments. Referring to FIG. 5 and FIG. 6, the signal unit 40 is configured as a sensor, and the sensor includes a first component 41 and a second component 42. One of the first component 41 and the second component 42 is disposed on the main unit 10, and the other is disposed on the push handle component 20 or the adjustment member 52. The first component 41 is configured to feed back the first state signal or the second state signal to the control unit according to an intensity of a sensed signal emitted by the second component 42. There are two designs between an intensity of a sensed signal and a fed-back state signal. For example, a first state signal is fed back when the sensed signal is greater than a preset threshold, and a second state signal is fed back when the sensed signal is less than or equal to the preset threshold; or a first state signal is fed back when the sensed signal is less than or equal to a preset threshold, and a second state signal is fed back when the sensed signal is greater than the preset threshold. The sensed signal is parameters such as a magnetic field intensity, a light sensing intensity, and a pressure value in some embodiments. The signal unit 40 outputs a corresponding state signal to the main control unit 14 according to these changes.

Descriptions are provided below by using an example in which a first state signal is fed back when the sensed signal is greater than a preset threshold, and a second state signal is fed back when the sensed signal is less than or equal to the preset threshold. Referring to FIG. 5 and FIG. 6, when the adjustment component 50 is a millstone tooth structure, that is, the adjustment component 50 includes the engagement member 51, the adjustment member 52, and the operating member 53, the first component 41 is disposed on the main unit, and the second component 42 is disposed on the push handle component 20. When the engagement portion 521 on the adjustment member 52 is engaged in the first position 511 (that is, the working position area) of the engagement member 51, the first component 41 is relatively close to the second component 42, and the first component 41 senses that the signal emitted by the second component 42 is greater than the preset threshold, so that the first component 41 sends the first state signal to the main control unit 14. When the user operates the operating member 53 to disengage the engagement portion 521 on the adjustment member 52, because the push handle component 20 or the adjustment member 52 moves away from the main unit 10 along the axis 514, and the position of the second component 42 moves with the push handle component 20, the distance between the first component 41 and the second component 42 becomes larger. Therefore, the first component 41 senses that the signal emitted by the second component 42 is less than or equal to the preset threshold, and the first component 41 sends the second state signal to the main control unit 14. When the adjustment member 52 enters the non-working position area, the position of the second component 42 moves with the push handle component 20, so that the distance between the first component 41 and the second component 42 continuously increases, and the first component 41 senses that the signal emitted by the second component 42 continuously attenuates, and continuously sends the second state signal to the main control unit 14. Therefore, when the push handle component 20 is in the working position area and is locked relative to the main unit, the signal unit 40 feeds back the first state signal; and when the push handle component 20 is in the working position area and is unlocked from the main unit 10, the signal unit 40 feeds back the second state signal. The signal unit 40 feeds back a second state signal when the push handle component 20 is in a non-working position area.

It should be noted that the signal emitted by the second component 42 is a magnetic field in some embodiments. For example, the second component 42 is a magnet, and the first component 41 is a Hall element. Further, when the push handle component 20 is in the working state, the first component 41 senses that the intensity of the signal emitted by the second component 42 is greater than or equal to the first threshold. When the push handle component 20 is in the retracted state, the first component 41 senses that the intensity of the signal emitted by the second component 42 is less than or equal to the second threshold. The first threshold is greater than the second threshold. For example, referring to FIG. 5, when the engagement portion 521 is engaged in the first position 511 (the working position area), the Hall element is relatively close to the magnet, and can sense a relatively strong magnetic field, and send a high-level signal, such as 5 V, to the control unit. Referring to FIG. 6, when the engagement part 521 leaves the first position, the Hall element is relatively far away from the magnet, senses a relatively weak magnetic field, and sends a low-level signal, such as 1.5 V, to the control unit. In this way, a state of the push handle component 20 is accurately determined by setting a proper threshold, so that the main control unit 14 acquires a corresponding state signal and properly controls a starting delay time of the functional component 30.

In some embodiments, referring to FIG. 14, the second component 42 is disposed on the push handle component 20 or the adjustment member 52, and forms, on the main unit 10, signal coverage areas 44 that enable the first component 41 to feed back the first state signal to the main control unit 14. When the push handle component 20 rotates in the working position area, positions of the signal coverage areas 44 formed on the main unit by the second component 42 also change accordingly, and an overlapping part between the signal coverage areas 43 defines an overlapping area. When the engagement portion 521 is engaged in each range area 51a, the first component 41 is located in the overlapping area. In such a design, no matter which range area 51a the engagement portion 521 is engaged in, it can be always ensured that the first component 41 is in the signal coverage areas 44. In this case, the control signal fed back to the main control unit 14 is always the first control signal.

The signal unit provided in this embodiment is described by using the adjustment component provided in the first example as an example. It is understood in some embodiments that the two signal units provided in the foregoing embodiments are separately applicable to electric tools having the foregoing two adjustment components.

According to the electric tool provided in this embodiment, by disposing the signal unit 40, detecting positions of the push handle component 20, and feeding back different state signals according to the positions of the push handle component 20, the control circuit executes different motor starting logics according to the different state signals, so that when the push handle component 20 is in the working position area, the user can conveniently control the motor to start, and when the push handle component 20 is in the non-working position area, difficulty in operating the switch assembly to start the motor by the user is increased, and a probability of accidentally starting the motor is reduced, thereby improving safety of the electric tool when the push handle component 20 is in the non-working position area.

Referring to FIG. 15, this application provides a control method for a motor of the electric tool 100 in the foregoing embodiments. As shown in FIG. 1, the electric tool 100 includes a main unit 10, a push handle component 20, an adjustment member, an engagement member, a signal unit 40, and a motor 14. The push handle component 20 is connected to the main unit 10, and the push handle component 20 is rotatable around the main unit 10. A rotation area of the push handle component 20 includes a working position area and a non-working position area other than the working position area. When the push handle component 20 is in the working position area, the push handle component 20 is provided for a user to operate to push the main unit 10 to move. The push handle component 20 is locked to the main unit 10 when the adjustment member is engaged with the engagement member, and the push handle component 20 is unlocked from the main unit 10 and is rotatable around the main unit 10 when the adjustment member is disengaged from the engagement member. The functional component includes a motor 13 and a working portion. The motor is configured to drive the working portion to move in a set path or working area, and/or execute a cutting task. The signal unit 40 is configured to feed back different state signals in response to position changes of the push handle component 20, the signal unit 40 feeds back a first state signal when the push handle component 20 is in the working position area and the push handle component 20 is locked relative to the main unit 10, and the signal unit 40 feeds back a second state signal when the push handle component 20 is in the non-working position area. The motor 14 is configured to drive the electric tool to move in a set path or working area, and/or execute a cutting task. For a specific limitation on the electric tool, refer to the foregoing embodiment 1. Details are not described herein again.

The control method for a motor is performed by a main control unit in a control circuit, and the control method for a motor includes the following steps:
Step S100: Receive the state signals fed back by the signal unit 40.
Step S200: Control the motor 14 to start working according to a first control logic when the state signal is the first state signal.
Step S300: Control the motor 14 to start working according to a second control logic when the state signal is the second state signal, where the second control logic is different from the first control logic.

In some embodiments, the electric tool 100 includes a power-on switch, the power-on switch is triggered in response to an operation by the user, to switch the control circuit between an activated state and an inactivated state, the control circuit allows current of a power supply to flow to the motor when the control circuit is in the activated state, and the control circuit prohibits the current of the power supply from flowing to the motor when the control circuit is in the inactivated state. A time in which the power-on switch is triggered and keeps a triggered state until the control circuit is switched from the inactivated state to the activated state is defined as a trigger holding time of the power-on switch. The motor starting switch includes a first operating element, the first operating element is configured to output a motor starting signal in response to an operation by the user, the control circuit is in the activated state, the motor starting switch is triggered, and the control circuit controls the current of the power supply to flow to the motor, to cause the motor to drive the working portion to work. The control circuit enters the activated state, and allows the motor starting signal to be received in a preset time, where the preset time is defined as an allowed trigger time of the motor starting switch.

The trigger holding time of the power-on switch is different under the first control logic and the second control logic; or the allowed trigger time of the motor starting switch is different under the first control logic and the second control logic; or the trigger holding time of the power-on switch is different and the allowed trigger time of the motor starting switch is different under the first control logic and the second control logic.

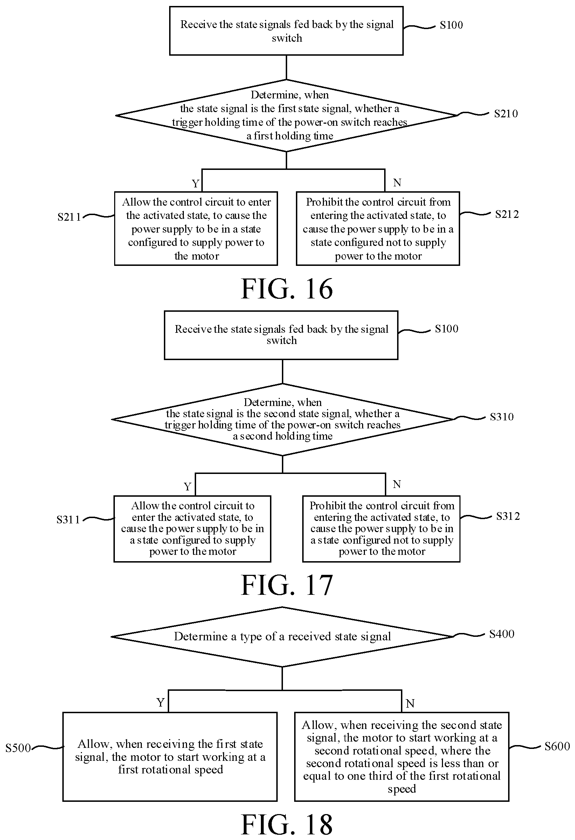

In some embodiments, referring to FIG. 16, in step S200, the first control logic includes at least:
Step S210: Determine, when the state signal is the first state signal, whether a trigger holding time of the power-on switch reaches a first holding time.
Step S211: Allow the control circuit to enter the activated state when the first holding time is reached.
Step S212: Prohibit the control circuit from entering the activated state when the first holding time is not reached.

Referring to FIG. 17, in step S300, the second control logic includes at least:
Step S310: Determine, when the state signal is the second state signal, whether a trigger holding time of the main power-on switch reaches a second holding time.
Step S311: Allow the control circuit to enter the activated state when the second holding time is reached.
Step S312: Prohibit the control circuit from entering the activated state when the second holding time is not reached, where the second holding time is greater than or equal to three times the first holding time. Preferably, the second holding time is greater than or equal to 2s.

In the foregoing embodiments, through the setting that the trigger holding time of the power-on switch is different under the first control logic and the second control logic, it is more difficult for the user to control the motor to start under the second control logic, thereby improving safety of the electric tool.

In some embodiments, in step S200, the first control logic includes at least: the control circuit enters the activated state, and is allowed to receive the motor starting signal within a first preset time; and controls, when receiving the motor starting signal, the current of the power supply to flow to the motor, to cause the motor to drive the working portion to work.

In step S300, the second control logic includes at least: the control circuit enters the activated state, and is allowed to receive the motor starting signal within a second preset time, or receives the motor starting signal at a fixed time point at an interval of a preset time since the control circuit enters the activated state; and controls, when receiving the motor starting signal, the current of the power supply to flow to the motor, to cause the motor to drive the working portion to work. The second preset time is less than the first preset time.

Preferably, the second preset time is less than or equal to 5s.

In the foregoing embodiments, through the setting that the allowed trigger time of the first operating element is different under the first control logic and the second control logic, it is more difficult for the user to control the motor to start under the second control logic, thereby improving safety of the electric tool.

It is understood that different trigger holding time of the power-on switch and different allowed trigger time of the motor starting switch are alternatively both set in some embodiments. For a specific implementation, refer to the foregoing embodiments of the electric tool. Details are not described herein again.

In some embodiments, the motor starting switch further includes an unlocking element. The unlocking element is configured as a mechanical operating member in some embodiments. The mechanical operating member is configured to control the first operating element to switch between a locked state and an unlocked state. The mechanical operating member includes a stop member that is operatably coupled to the first operating element. When the unlocking element is not operated, the stop member butts against the first operating element, so that the first operating element cannot be operated to move toward the push rod, and therefore cannot output a motor starting signal. In this case, the first operating element is in the locked state. When the unlocking element is operated, the stop member releases the first operating element, so that the first operating element can be operated to move toward the push rod, and the first operating element is triggered and can output the motor starting signal. In this case, the first operating element is in the unlocked state. Therefore, under the second control logic, the user can control the motor to start only after triggering the unlocking element and the first operating element in the preset time.

The unlocking element is alternatively configured as an electronic switch, configured to output an unlocking signal in response to an operation by the user in some embodiments. When the unlocking element is configured as an electronic switch, under the first control logic, the control circuit is configured to receive the unlocking signal and the motor starting signal within the first preset time since the activated state is entered. Under the second control logic, the control circuit is configured to receive the unlocking signal and the motor starting signal within the second preset time since the activated state is entered, where the second preset time is less than the first preset time. The motor starting switches are configured, and under the second control logic, a time for the control circuit to receive signals of the two switches is shortened, thereby increasing difficulty in starting the motor under the second control logic, and improving safety of the electric tool when the push handle component is in a retracted state.

In some embodiments, when the unlocking element is an electronic switch, a trigger holding time of the unlocking element is further limited, to improve safety of the electric tool.

Specifically, the first control logic includes at least: the control circuit enters the activated state, and determines whether the continuous trigger time in which the unlocking element is triggered and keeps the triggered state reaches a third holding time; and is allowed to receive the motor starting signal when the third holding time is reached, and controls, when receiving the motor starting signal, the current of the power supply to flow to the motor, to cause the motor to drive the working portion to work.
the second control logic includes at least: the control circuit enters the activated state, and determines whether the continuous trigger time in which the unlocking element is triggered and keeps the triggered state reaches a fourth holding time; and is allowed to receive the motor starting signal when the fourth holding time is reached, and controls, when receiving the motor starting signal, the current of the power supply to flow to the motor, to cause the motor to drive the working portion to work. The fourth holding time is greater than the third holding time, and the fourth holding time is greater than or equal to three times the third holding time. Because the fourth holding time is greater than the third holding time, under the second control logic, the control circuit can be allowed to receive the motor starting signal only after the user triggers the unlocking element for a long time. For the user, in a normal working state, as long as the unlocking element is triggered for a short time and then the first operating element is triggered, the motor can be controlled to start. Therefore, when the push handle in the retracted state, it is very difficult for the user to conceive that the motor can be started only after the user triggers the unlocking element for a long time and then triggers the first operating element. Even if the user triggers the unlocking element accidentally, the unlocking element is not triggered accidentally for a long time, thereby improving use safety of the electric tool.

In some embodiments, when the unlocking element is an electronic switch, the second control logic further includes: the control circuit enters the activated state, and is allowed to receive the unlocking signal at a fixed time point at an interval of a preset time since the control circuit enters the activated state. That is, under the second control logic, the unlocking signal can be received only by triggering the unlocking element at a fixed moment after the control circuit enters the activated state. When the time does not reach the fixed moment or exceeds the fixed moment, the control circuit is not allowed to receive the unlocking signal. In the normal working state, the user can trigger the unlocking element in a period of time after the power-on switch is triggered. Therefore, when the push handle is in the retracted state, it is very difficult for the user to conceive that the unlocking element can be effectively triggered only at a fixed moment. Even if the user triggers the unlocking element accidentally, the probability of triggering the unlocking element accidentally at the fixed moment is very low. Therefore, the solution provided in this embodiment can improve use safety of the electric tool.

In some embodiments, because the motor starting switch includes the unlocking element and the first operating element, not only a continuous trigger time of the unlocking element is limited in some embodiments, but also an allowed trigger time of the first operating element is limited in some embodiments, to further increase difficulty in starting the motor under the second control logic.

Specifically, the first control logic further includes: receiving of the motor starting signal within the first preset time is allowed since a continuous trigger time in which the unlocking element is triggered and keeps the triggered state reaches the third holding time.
the second control logic further includes: receiving of the motor starting signal within the second preset time is allowed since a continuous trigger time in which the unlocking element is triggered and keeps the triggered state reaches the fourth holding time, where the second preset time is less than the first preset time. Specifically, the second preset time is less than or equal to 5s, and the first preset time is greater than or equal to 30s.

Alternatively, the second control logic further includes: receiving of the motor starting signal at a fixed time point at an interval of a preset time from the fourth holding time that is reached is allowed since a continuous trigger time in which the unlocking element is triggered and keeps the triggered state reaches the fourth holding time. The preset time is the 5th second, the 10th second, the 15th second, or the 20th second after the fourth holding time is reached in some embodiments.

In some embodiments, alternatively, the electric tool is not provided with the power-on switch 11 , and the control circuit can enter the activated state when the electric tool is inserted into the power supply 12. Specifically, the electric tool further includes a power supply mounting portion, the power supply mounting portion is configured to detachably mount a power supply, the power supply includes a battery pack, and the control circuit enters an activated state in response to that the battery pack is mounted to the battery pack mounting portion. The control circuit includes a motor starting switch, the motor starting switch includes an unlocking element and a first operating element, the unlocking element is configured to output an unlocking signal in response to a trigger by the user, and the first operating element is configured to output a motor starting signal in response to a trigger by the user.

On the basis of this, the first control logic includes at least: the control circuit enters the activated state, and determines whether the continuous trigger time in which the unlocking element is triggered until the unlocking signal is outputted to the control circuit reaches a third holding time; and is allowed to receive the motor starting signal when the third holding time is reached, and controls, when receiving the motor starting signal, the current of the power supply to flow to the motor, to cause the motor to drive the working portion to work.
the second control logic includes at least: the control circuit enters the activated state, and determines whether the continuous trigger time in which the unlocking element is triggered until the unlocking signal is outputted to the control circuit reaches a fourth holding time; and is allowed to receive the motor starting signal when the fourth holding time is reached, and controls, when receiving the motor starting signal, the current of the power supply to flow to the motor, to cause the motor to drive the working portion to work; and The fourth holding time is greater than the third holding time, and the fourth holding time is greater than or equal to three times the third holding time.

Furthermore, the first control logic further includes: receiving of the motor starting signal within the first preset time is allowed since a continuous trigger time in which the unlocking element is triggered until the unlocking signal is outputted to the control circuit reaches the third holding time.

the second control logic further includes: receiving of the motor starting signal within the second preset time is allowed since a continuous trigger time in which the unlocking element is triggered until the unlocking signal is outputted to the control circuit reaches the fourth holding time, where the second preset time is less than the first preset time; or receiving of the motor starting signal at a fixed time point at an interval of a preset time is allowed since a time in which the unlocking element is triggered and keeps the triggered state reaches the fourth holding time.

In some embodiments, the control method further includes: allowing, when the first state signal is received, a rotational speed during starting of the motor to be a first rotational speed; and allowing, when the second state signal is received, a rotational speed during starting of the motor to be a second rotational speed, where the second rotational speed is less than or equal to one third of the first rotational speed. Preferably, the second rotational speed is less than or equal to one fifth of the first rotational speed.

In some embodiments, the control method further includes: controlling the motor to stop after operating at the second rotational speed for a preset time, where the preset time is less than or equal to 5s.

For a specific limitation on the foregoing control method, refer to the limitation on the electric tool in the foregoing embodiments. Details are not described herein again. According to the foregoing control method, state signals fed back by the signal unit when the push handle component is in different positions are collected, and different starting logics are executed according to the different state signals, so that when the push handle component is in a retracted state, a probability of accidentally starting the electric tool is reduced, thereby reducing use risks of the user and improving safety of the electric tool.

As shown in FIG. 1, a third embodiment of this application provides an electric tool 100, including a main unit 10, a push handle component 20, an adjustment member 52, an engagement member 51, a functional component, a signal unit 40, and a control circuit. The push handle component 20 is connected to the main unit 10, and the push handle component 20 is rotatable around a connection point between the push handle component 20 and the main unit 10 relative to the main unit 10. A rotation area of the push handle component 20 includes a working position area and a non-working position area other than the working position area. When the push handle component 20 is in the working position area, the push handle component 20 is provided for a user to operate to push the main unit 10 to move. The adjustment member 52 and the engagement member 51 are configured to adjust a position of the push handle component 20. The push handle component 20 is locked to the main unit 10 when the adjustment member 52 is engaged with the engagement member 51, and the push handle component 20 is unlocked from the main unit 10 and is rotatable around the main unit 10 when the adjustment member 52 is disengaged from the engagement member 51. The functional component includes a motor 13 and a working portion. The motor is configured to drive the working portion to move in a set path or working area, and/or execute a cutting task. The signal unit 40 is configured to feed back different state signals in response to position changes of the push handle component 20, the signal unit 40 feeds back a first state signal when the push handle component 20 is in the working position area and the push handle component 20 is locked relative to the main unit 10, and the signal unit 40 feeds back a second state signal when the push handle component 20 is in the non-working position area. The control circuit receives the state signal fed back by the push handle component 20, and controls an operating rotational speed of the motor 13 during starting. The control circuit allows, when receiving the first state signal, the motor 13 to start working at a first rotational speed, and the control circuit allows, when receiving the second state signal, the motor 13 to start working at a second rotational speed, where the second rotational speed is less than or equal to one third of the first rotational speed.

In some embodiments, when the motor 13 operates at the second rotational speed, the main control unit 14 is further configured to control the motor 13 to stop after operating for a preset time, where the preset time is less than 5s. By controlling the motor 13 to stop after operating for a preset time, safety risks can be further reduced.

In some embodiments, the main control unit 14 is further configured to adjust, according to a state signal, a starting logic for starting the motor 13. The main control unit 14 controls, by using a first control logic, the motor 13 to start working when receiving the first state signal, and the main control unit 14 controls, by using a second control logic, the motor to start working when receiving the second state signal, where the second control logic is different from the first control logic.

For a specific limitation on the foregoing electric tool, refer to the limitation on the electric tool in the foregoing embodiments. Details are not described herein again. According to the electric tool 100 provided in the foregoing embodiment, when the push handle component 20 is in a working position area and a non-working position area, starting rotational speeds of the motor 13 are allowed to be different. When the push handle component 20 is in the non-working position area, the starting rotational speed of the motor 13 is reduced. Even if the user accidentally starts the motor 13 in a process of folding a push rod, the user is not injured, thereby reducing use risks of the user and improving safety of the electric tool 100.

Another embodiment of this application provides a control method for an electric tool. The control method is based on the electric tool provided in the foregoing embodiments. The method is performed by a main control unit in a control circuit. As shown in FIG. 18, the control method includes the following steps:
Step S400: Determine a type of a received state signal.
Step S500: Allow, when receiving the first state signal, the motor to start working at a first rotational speed.
Step S600: Allow, when receiving the second state signal, the motor to start working at a second rotational speed, where the second rotational speed is less than or equal to one third of the first rotational speed.

Preferably, the second rotational speed is less than or equal to one fifth of the first rotational speed.

In an embodiment, the control method further includes: controlling the motor to stop after the motor is controlled to operate at the second rotational speed for a preset time. The preset time is less than or equal to 5s.

For a specific limitation on the foregoing control method, refer to the limitation on the electric tool in the foregoing embodiments. Details are not described herein again. According to the electric tool 100 provided in the foregoing embodiment, when the push handle component 20 is in a working position area and a non-working position area, starting rotational speeds of the motor 13 are allowed to be different. When the push handle component 20 is in the non-working position area, the starting rotational speed of the motor 13 is reduced. Even if the user accidentally starts the motor 13 in a process of folding a push rod, the user is not injured, thereby reducing use risks of the user and improving safety of the electric tool 100.

In some embodiments of this application provides an electric tool, including: a main unit; a push handle component, connected to the main unit, where the push handle component is rotatable around a connection point between the push handle component and the main unit relative to the main unit, a rotation area of the push handle component includes a working position area and a non-working position area other than the working position area, and when the push handle component is in the working position area, the push handle component is provided for a user to operate to push the main unit to move; an adjustment member and an engagement member, where the push handle component is locked to the main unit when the adjustment member is engaged with the engagement member, and the push handle component is unlocked from the main unit and is rotatable around the main unit when the adjustment member is disengaged from the engagement member; a signal unit, where the signal unit is configured to feed back different state signals in response to position changes of the push handle component, the signal unit feeds back a first state signal when the push handle component is in the working position area and the push handle component is locked relative to the main unit, and the signal unit feeds back a second state signal when the push handle component is in the non-working position area; and a functional component, including a motor and a working portion, where the motor is configured to drive the working portion to move in a set path or working area, and/or execute a cutting task; and a control unit, configured to receive the state signals fed back by the signal unit and adjust, according to the state signals, a starting logic for starting the motor. The control unit controls, by using a first control logic, the motor to start working when the control unit receives the first state signal, and the control unit controls, by using a second control logic, the motor to start working when the control unit receives the second state signal, where the second control logic is different from the first control logic. The control unit is further configured to allow, when receiving the first state signal, the motor to start working at a first rotational speed, and allow, when receiving the second state signal, the motor to start working at a second rotational speed, where the second rotational speed is less than the first rotational speed, and the second rotational speed is less than or equal to one third of the first rotational speed.

Preferably, the second rotational speed is less than or equal to one fifth of the first rotational speed.

For a specific limitation on the foregoing electric tool, refer to the limitation on the electric tool in the foregoing embodiments. Details are not described herein again. According to the electric tool provided in the foregoing embodiments, when the push handle component is in a working position area and a non-working position area, the signal unit feeds back different state signals, and the control unit executes different starting logics according to the different state signals, so that when the push handle component is in a retracted state, it is more difficult to start the motor, and a probability of accidentally starting the electric tool is reduced, thereby reducing use risks of the user. Even when the motor is started and the push handle component is in different positions, the control unit allows starting rotational speeds of the motor to be different. When the push handle component is in the non-working position area, the starting rotational speed of the motor is reduced. Even if the user accidentally starts the motor in a process of folding a push rod, the user is not injured, thereby reducing use risks of the user and improving safety of the electric tool.

The technical features in the foregoing embodiments may be randomly combined. For concise description, not all possible combinations of the technical features in the embodiment are described. However, provided that combinations of the technical features do not conflict with each other, the combinations of the technical features are considered as falling within the scope recorded in this specification.

The foregoing embodiments only show several implementations of the present invention and are described in detail, but they are not to be construed as a limit to the patent scope of this application. A person of ordinary skill in the art may make various changes and improvements without departing from the ideas of the present invention, which shall all fall within the protection scope of the present invention. Therefore, the patent protection scope of the present invention is subject to the protection scope of the appended claims.

In the description of the present invention, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, the terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present invention, unless otherwise specified, "a plurality of" means two or more than two.

In the present invention, unless explicitly specified or limited otherwise, the terms "mounted", "connected", "connection", and "fixed" should be understood broadly, for example, which may be fixed connections, detachable connections or integral connections; may be mechanical connections or electrical connections; or the connection may be a direct connection, an indirect connection through an intermediary, or internal communication between two elements or mutual action relationship between two elements, unless otherwise specified explicitly. Persons of ordinary skill in the art may understand the specific meanings of the foregoing terms in the present invention according to specific situations.

In the present invention, unless explicitly specified or limited otherwise, a first characteristic "on" or "under" a second characteristic may be the first characteristic in direct contact with the second characteristic, or the first characteristic in indirect contact with the second characteristic by using an intermediate medium. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

It should be noted that, when a component is referred to as "being fixed to" or "being disposed to" another component, the component may be directly on the another component, or there may be an intermediate component. When a component is considered to be "connected to" another component, the component may be directly connected to the another component, or an intervening component may also be present. The terms "vertical", "horizontal", "upper", "down", "left", "right" and similar expressions used in this specification are only for purposes of illustration but not indicate a unique implementation.

## Claims

1. An electric tool, comprising:
a main unit;
a functional component, comprising a working portion and a motor configured to drive the working portion to work;
a motor starting switch, configured to control the motor in response to an operation by a user;
a push handle component, connected to the main unit, wherein the push handle component is rotatable around the main unit, a rotation area of the push handle component comprises a working position area and a non-working position area, and the push handle component is fixed relative to the main unit and is used for the user to operate to push the main unit to move when the push handle component is in the working position area;
an adjustment member and an engagement member, wherein the push handle component is locked to the main unit when the adjustment member is engaged with the engagement member, and the push handle component is unlocked from the main unit and is rotatable around the main unit when the adjustment member is disengaged from the engagement member;
a signal unit, configured to feed back different state signals in response to position changes of the push handle component, wherein the signal unit feeds back a first state signal when the push handle component is in the working position area and the push handle component is locked to the main unit, and the signal unit feeds back a second state signal when the push handle component is in the non-working position area; and
a control circuit, configured to receive the state signals fed back by the signal unit and adjust, according to the different received state signals, a control logic for starting the motor;
wherein the control circuit controls, according to a first control logic, the motor to start working when the control circuit receives the first state signal, and the control circuit controls, according to a second control logic, the motor to start working when the control circuit receives the second state signal, wherein the second control logic is different from the first control logic.

2. The electric tool according to claim 1, wherein the electric tool comprises a power-on switch, the power-on switch is triggered in response to an operation by the user, to switch the control circuit between an inactivated state and an activated state, the control circuit allows current of a power supply to flow to the motor when the control circuit is in the activated state, and the control circuit prohibits the current of the power supply from flowing to the motor when the control circuit is in the inactivated state, wherein a time in which the power-on switch is triggered until the control circuit is switched from the inactivated state to the activated state is defined as a trigger holding time of the power-on switch;
the motor starting switch comprises a first operating element, the first operating element outputs a motor starting signal in response to an operation by the user, the control circuit is in the activated state, and the first operating element is triggered, the control circuit controls the current of the power supply to flow to the motor, to cause the motor to drive the working portion to work, wherein the control circuit enters the activated state, allows the motor starting signal to be received in a preset time, and the preset time is defined as an allowed trigger time of the first operating element; and
trigger holding times of the power-on switch are different under the first control logic and the second control logic; and/or
allowed trigger times of the first operating element are different under the first control logic and the second control logic.

3. The electric tool according to claim 2, wherein the control circuit further comprises a timing unit, the control circuit configured to determine, according to a timing time of the timing unit, whether the trigger holding time of the power-on switch satisfies a preset condition, and/or
the control circuit further comprises a timing unit, the control circuit configured to determine, according to a timing time of the timing unit, whether the allowed trigger time of the first operating element satisfies a preset condition.

4. The electric tool according to claim 2, wherein the first control logic comprises at least: the trigger holding time of the power-on switch reaches a first holding time, the control circuit is allowed to enter the activated state; and
the second control logic comprises at least: the trigger holding time of the power-on switch reaches a second holding time, the control circuit is allowed to enter the activated state;
wherein the second holding time is greater than the first holding time, and the second holding time is greater than or equal to three times the first holding time.

5. The electric tool according to claim 2 or 4, wherein the first control logic further comprises: when the control circuit enters the activated state, the allowed trigger time of the first operating element is configured within a first preset time, and the control circuit receives the motor starting signal within the first preset time, controls the current of the power supply to flow to the motor, to cause the motor to drive the working portion to work; and
the second control logic comprises at least:when the control circuit enters the activated state, the allowed trigger time of the first operating element is configured within a second preset time, and the control circuit receives the motor starting signal within the second preset time, controls the current of the power supply to flow to the motor, to cause the motor to drive the working portion to work;
wherein the second preset time is less than the first preset time.

6. The electric tool according to claim 5, wherein the second holding time is greater than or equal to 2s; and the second preset time is less than or equal to 5s.

7. The electric tool according to claim 2 or 4, wherein the second control logic comprises at least: the allowed trigger time of the first operating element is configured as a preset fixed time point at an interval from when the control circuit enters the activated state, the control circuit is allowed to receive the motor starting signal at the fixed time point, to control the current of the power supply to flow to the motor, to cause the motor to drive the working portion to work.

8. The electric tool according to claim 5, wherein the motor starting switch further comprises an unlocking element, and the unlocking element is configured to output an unlocking signal in response to an operation by the user;
the first control logic comprises at least: the control circuit enters the activated state, and a continuous trigger time in which the unlocking element is triggered until the control circuit receives the unlocking signal reaches a third holding time, the control circuit is allowed to receive the motor starting signal, to control the current of the power supply to flow to the motor according to the motor starting signal, to cause the motor to drive the working portion to work; and
the second control logic comprises at least: the control circuit enters the activated state, and the continuous trigger time in which the unlocking element is triggered until the control circuit receives the unlocking signal reaches a fourth holding time, the control circuit is allowed to receive the motor starting signal, to control the current of the power supply to flow to the motor according to the motor starting signal, to cause the motor to drive the working portion to work;
wherein the fourth holding time is greater than the third holding time, and the fourth holding time is greater than or equal to three times the third holding time.

9. The electric tool according to claim 2, wherein the motor starting switch further comprises an unlocking element, and the unlocking element is configured to output an unlocking signal in response to an operation by the user, and the control circuit is allowed to receive the motor starting signal after receiving the unlocking signal; and
the second control logic comprises at least: the control circuit enters the activated state, and an interval of a preset fixed time point exists between when the control circuit enters the activated state and when the control circuit receives the unlocking signal.

10. The electric tool according to claim 1, wherein the electric tool further comprises a power supply mounting portion, configured to mount a power supply, the power supply comprises a battery pack, the battery pack is detachably connected to the power supply mounting portion to supply power to the electric tool, and the control circuit enters an activated state in response to that the battery pack is mounted to the power supply mounting portion;
the motor starting switch comprises an unlocking element and a first operating element, the unlocking element outputs an unlocking signal in response to an operation by the user, and the first operating element outputs a motor starting signal in response to an operation by the user;
the first control logic further comprises: the control circuit enters the activated state, and a continuous trigger time in which the unlocking element is triggered until the control circuit receives the unlocking signal reaches a third holding time, the control circuit is allowed to receive the motor starting signal, and controls the current of the power supply to flow to the motor according to the motor starting signal, to cause the motor to drive the working portion to work; and
the second control logic further comprises: the control circuit enters the activated state, and the continuous trigger time in which the unlocking element is triggered until the control circuit receives the unlocking signal reaches a fourth holding time, the control circuit is allowed to receive the motor starting signal, and controls the current of the power supply to flow to the motor according to the motor starting signal, to cause the motor to drive the working portion to work;
wherein the fourth holding time is greater than the third holding time, and the fourth holding time is greater than or equal to three times the third holding time.

11. The electric tool according to claim 10, wherein the first control logic further comprises: the control circuit is allowed to receive the motor starting signal within a first preset time; and
the second control logic further comprises: the control circuit is allowed to receive the motor starting signal in a second preset time, wherein the second preset time is less than the first preset time; or
the second control logic further comprises: the control circuit is allowed to receive the motor starting signal at an interval of a preset fixed time point since the fourth holding time is reached.

12. The electric tool according to claim 1, wherein the control circuit allows the motor to start working at least at a first rotational speed when the signal unit feeds back the first state signal; and
the control circuit allows the motor to start working at least at a second rotational speed when the signal unit feeds back the second state signal, wherein the second rotational speed is less than or equal to one third of the first rotational speed.

13. The electric tool according to claim 12, wherein the control circuit further controls the motor to stop rotating after operating at the second rotational speed for a preset time, wherein the preset time is less than or equal to 5s.

14. The electric tool according to claim 1, wherein the electric tool is a hand push lawn mower; and
the motor comprises a cutting motor, the working portion comprises a cutting blade, and the cutting motor is configured to drive the cutting blade to move, to perform cutting work; and/or
the motor comprises a self-driving motor, the working portion comprises a moving assembly, and the self-driving motor is configured to drive the moving assembly to move, to drive the main unit to move.

15. The electric tool according to claim 1, wherein the signal unit is configured as a micro switch, the micro switch comprises a trigger portion and a switching member, the switching member is controlled by the trigger portion, and the micro switch switches between an off state and an on state in response to a change of the push handle component between the working position area and the non-working position area, wherein the micro switch is in the off state or the on state, the signal unit feeds back the first state signal or the second state signal.

16. The electric tool according to claim 1, wherein the signal unit is configured as a sensor, the sensor comprises a first component and a second component, one of the first component and the second component is disposed on the main unit, the other is disposed on the push handle component or the adjustment member, and the first component is configured to feed back the first state signal or the second state signal to the control circuit according to an intensity of a sensed signal emitted by the second component.

17. An electric tool, comprising:
a main unit;
a functional component, comprising a working portion and a motor configured to drive the working portion to work;
a motor starting switch, configured to control the motor in response to an operation by a user;
a push handle component, connected to the main unit, wherein the push handle component is rotatable around the main unit, a rotation area of the push handle component comprises a working position area and a non-working position area, and the push handle component is fixed relative to the main unit and is used for the user to operate to push the main unit to move when the push handle component is in the working position area;
an adjustment member and an engagement member, wherein the push handle component is locked to the main unit when the adjustment member is engaged with the engagement member, and the push handle component is unlocked from the main unit and is rotatable around the main unit when the adjustment member is disengaged from the engagement member;
a signal unit, wherein the signal unit is configured to feed back different state signals in response to position changes of the push handle component, the signal unit feeds back a first state signal when the push handle component is in the working position area and the push handle component is locked relative to the main unit, and the signal unit feeds back a second state signal when the push handle component is in the non-working position area; and
a control circuit, configured to receive the state signals fed back by the signal unit, wherein the control circuit allows, when receiving the first state signal, the motor to start working at least at a first rotational speed, and the control unit allows, when receiving the second state signal, the motor to start working at least at a second rotational speed, wherein the second rotational speed is less than or equal to one third of the first rotational speed.

18. The electric tool according to claim 17, wherein the control circuit is further configured to control the motor to stop rotating after operating at the second rotational speed for a preset time, wherein the preset time is less than or equal to 5s.
